# EUROPÄISCHE PATENTANMELDUNG

(11) **EP 3 386 207 A1**
(43) Veröffentlichungstag der Anmeldung: **10.10.2018**
(21) Anmeldenummer: 17164996.5
(22) Anmeldetag: 05.04.2017
(51) Int. Cl.: H04N 21/4725, G06F 17/30, H04N 21/858

(54) **VERFAHREN ZUM BETRIEB EINES DATENVERARBEITUNGSSYSTEMS ZUR BEREITSTELLUNG EINES INTERAKTIVEN VIDEOINHALTS**

(71) Anmelder: CLIK S.A., 7243 Bereldange (LU)
(72) Erfinder: PARAFOROS, Alexandros, 54296 Trier (DE)
(74) Vertreter: Rössler, Matthias

(57) **Zusammenfassung**

Verfahren zum Betrieb eines Datenverarbeitungssystems (23) zur Bereitstellung eines interaktiven Videoinhalts mit mindestens Interaktionsmöglichkeit für einen Benutzer mit dem Datenverarbeitungssystem (23) umfassend zumindest die folgenden Schritte:
a) Wiedergeben eines Videos (1) in einer Videodarstellungsebene (2), wobei das Video (1) dem Datenverarbeitungssystem (23) als ein erster Datenstrom (21) bereitgestellt wird, und
b) Bereitstellen mindestens eines für einen Benutzer aktivierbaren Aktivierungsbereichs (3,4) in einer die Videodarstellungsebene (2) zumindest teilweise überlagernden Aktivierungsebene (5,6), wobei der mindestens eine Aktivierungsbereich (3, 4) dem Datenverarbeitungssystem (23) als ein zweiter Datenstrom (22) bereitgestellt wird, wobei eine Veränderung des mindestens einen Aktivierungsbereichs (3, 4) vorgegeben ist, die zumindest teilweise mit der Wiedergabe des Videos (1) synchronisiert ist und wobei der erste Datenstrom (21) und der zweite Datenstrom (22) voneinander getrennt sind.

## Beschreibung

Die Erfindung betrifft ein Verfahren zur Bereitstellung eines interaktiven Videoinhalts, welches insbesondere eine besondere Art des Interagierens eines Benutzers mit einem Datenverarbeitungssystem ermöglicht, auf welchem der Videoinhalt bereitgestellt wird.

In vielen Anwendungsbereichen und Technologien kommt der Interaktion von Benutzern mit Datenverarbeitungssystemen eine große Bedeutung zu. Die Erfindung ist in solchen Anwendungsbereichen verwertbar. Ein hier besonders angesprochener Anwendungsbereich ist die effiziente Interaktion eines Benutzers mit einem Datenverarbeitungssystem, um wissenschaftliche und technische Inhalte effizient abzurufen. Durch den immer umfangreicheren Einsatz komplexer Technologien erfordern viele Aufgaben insbesondere im Arbeitsleben immer spezialisiertere wissenschaftliche und technische Kenntnisse. Zudem wächst der Wissensstand der Menschheit immer weiter an, so dass ein Einzelner auch in einem einzelnen Fachgebiet nicht auch nur annähernd alle bisherigen Inhalte und Erkenntnisse kennen kann oder gar von allen hinzukommenden Erkenntnissen erfahren kann. Um das bekannte Wissen aber möglichst umfassend ausnutzen zu können, ist jedenfalls der effiziente Zugriff hierauf sehr wertvoll. Dazu ist es bekannt, technische Hilfsmittel wie insbesondere Datenverarbeitungssysteme zu verwenden.

Moderne Datenverarbeitungssysteme wie Computer für den privaten Gebrauch können Inhalte auf vielfältige Art darstellen. Insbesondere können dazu Videos wiedergegeben werden. Videos bieten den Vorteil, dem Betrachter Inhalte auf besonders anschauliche Weise in besonders kurzer Zeit vermitteln zu können.

Insbesondere können Videos wiedergegeben werden, die über das Internet geladen werden. Das erfolgt regelmäßig in einem Browser. Ein Browser bietet einem Benutzer regelmäßig verschiedenste Möglichkeiten zur Interaktion. Insbesondere können Links auf Internetseiten angeklickt werden, wodurch die Links neue Internetseiten öffnen oder andere Funktionen auslösen. Über den Browser kann der Benutzer so auf effiziente Weise mit dem Datenverarbeitungssystem interagieren und die gewünschten Inhalte besonders schnell finden.

Die Interaktion eines Benutzers mit einem Datenverarbeitungssystem unter Verwendung eines Videos ist aber oft ineffizient, weil in einem Video Inhalte in einer zeitlich veränderlichen Form dargestellt werden, der Benutzer aber nicht in gleicher Weise zeitlich veränderlich mit dem Datenverarbeitungssystem interagieren kann.

Hiervon ausgehend ist es Aufgabe der hier vorliegenden Erfindung, die im Zusammenhang mit dem Stand der Technik geschilderten technischen Probleme zu lösen bzw. zumindest zu verringern. Es soll insbesondere ein Verfahren zum Betrieb eines Datenverarbeitungssystems zur Bereitstellung eines interaktiven Videoinhalts vorgestellt werden, welches insbesondere eine besonders effiziente Art des Interagierens eines Benutzers mit einem Datenverarbeitungssystem ermöglichen kann. Weiterhin soll ein Verfahren zur Herstellung eines dazu benötigten Datenstroms vorgestellt werden.

Diese Aufgabe wird gelöst mit einem Verfahren zum Betrieb eines Datenverarbeitungssystems zur Bereitstellung eines interaktiven Videoinhalts gemäß den Merkmalen des Patentanspruchs 1. Weitere vorteilhafte Ausgestaltungen des Verfahrens sind in den abhängig formulierten Patentansprüchen angegeben. Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Erfindungsgemäß wird ein Verfahren zum Betrieb eines Datenverarbeitungssystems zur Bereitstellung eines interaktiven Videoinhalts mit mindestens Interaktionsmöglichkeit für einen Benutzer mit dem Datenverarbeitungssystem vorgestellt, das zumindest die folgenden Schritte umfasst:
a) Wiedergeben eines Videos in einer Videodarstellungsebene, wobei das Video dem Datenverarbeitungssystem als ein erster Datenstrom bereitgestellt wird, und
b) Bereitstellen mindestens eines für einen Benutzer aktivierbaren Aktivierungsbereichs in einer die Videodarstellungsebene zumindest teilweise überlagernden Aktivierungsebene, wobei der mindestens eine Aktivierungsbereich dem Datenverarbeitungssystem als ein zweiter Datenstrom bereitgestellt wird, wobei eine Veränderung des mindestens einen Aktivierungsbereichs vorgegeben ist, die zumindest teilweise mit der Wiedergabe des Videos synchronisiert ist, wobei der erste Datenstrom und der zweite Datenstrom voneinander getrennt sind.

Das hier beschriebene Verfahren beschreibt eine neue Art der Bereitstellung interaktiver Videoinhalte. Diese Art der Bereitstellung kann auch als Interaktionstechnologie bezeichnet werden. Sie schafft Interaktionsmöglichkeit für einen Benutzer mit einem Video. Das Verfahren bzw. die Interaktionstechnologie werden nachfolgend anhand einer Vielzahl von praktischen Beispielen näher erläutert. Im Folgenden sind (je nach Zusammenhang) anschauliche Beispiele aus der Medizin, der Computer- und Softwareentwicklung, dem Hobbybereich etc. gewählt, in denen die mit dem Verfahren beschriebene Art der Bereitstellung interaktiver Videoinhalte vorgestellt wird. Die Auswahl der Beispiele ist jedoch für die Anwendbarkeit des Verfahrens und der beschriebenen Technologie nicht limitierend. Das Verfahren bezieht sich insbesondere auf zweidimensionale Videos, die durch eine Abfolge von (zweidimensionalen) Frames gebildet sind und die auf Bildschirmen oder Projektoren dargestellt werden. Bei zweidimensionalen Videos bieten das Verfahren bzw. die Technologie eine erhebliche Erweiterung der Interaktionsmöglichkeiten eines Benutzers mit dem Video. Das Verfahren ist darüber hinaus auf Videos übertragbar, die dem Benutzer auf einer gekrümmten Darstellungsfläche oder mit Hilfe einer 3D-Brille präsentiert werden, um dem Benutzer einen räumlichen Eindruck zu vermitteln. Hierunter fallen beispielsweise sogenannte 360° Videos, die mit einer 360° Kamera aufgenommen wurden. Das Verfahren ist auch auf dreidimensionale Videos übertragbar, die dreidimensionale Videodaten enthalten.

Die Schritte a) und b) werden bevorzugt zeitgleich und insbesondere zeitlich synchronisiert durchgeführt.

Mit dem beschriebenen Verfahren kann der Benutzer besonders effizient mit dem Datenverarbeitungssystem interagieren, insbesondere unter Verwendung des wiedergegebenen Videos. Wird in dem Video beispielsweise ein sich bewegendes Objekt dargestellt, so kann diesem Objekt ein Aktivierungsbereich zugeordnet werden, der mit dem Objekt bzw. mit der Bewegung des Objekts in dem Video synchronisiert bewegt wird. Der Benutzer kann diesen Aktivierungsbereich beispielsweise mit einer Computermaus anklicken. Weil dieser Aktivierungsbereich für den Benutzer transparent ist, entsteht bei dem Benutzer das Anwendungsgefühl unmittelbar auf das Objekt in dem Video zu klicken. Dies kann beispielsweise dazu genutzt werden, dem Benutzer zu ermöglichen, zu dem in dem Video dargestellten Objekt gezielt weitere Aktionen auszulösen wie beispielsweise weitere Inhalte abzurufen. Das ist insbesondere dann sinnvoll, wenn in dem Video eine Vielzahl von einzelnen sich bewegenden Objekten dargestellt ist.

Mit der Formulierung "aktivierbarer" Aktivierungsbereich ist hier nur gemeint, dass der Aktivierungsbereich eine Interaktion mit dem Benutzer ermöglicht. Der Begriff "aktivierbar" entspricht also hier beispielsweise dem Begriff "klickbar" oder "schaltbar", je nach dem in welchem Kontext das Verfahren hier eingesetzt wird. Der Aktivierungsbereich ist insbesondere einem in dem Video dargestellten Objekt zugeordnet ist und die vom Benutzer angeklickt oder in äquivalenter Weise dazu vorgesehen sein, vom Benutzer eine Interaktion entgegen zu nehmen.

Eine derartige Interaktion des Benutzers mit dem Datenverarbeitungssystem kann insbesondere deshalb besonders effizient sein, weil so gewünschte Inhalte zu einzelnen Objekten in einem Video auf den Wunsch des Benutzers hin besonders schnell und bequem bereitgestellt werden können. Beispielsweise kann das beschriebene Verfahren für Videos aus dem medizinischen Bereich eingesetzt werden. Dabei kann der Benutzer beispielsweise im Video einer Operation einzelne Organe anklicken und damit entsprechende Inhalte abrufen. Damit kann auf eine umfangreiche Beschreibung des Videos verzichtet werden, aus der sich der Benutzer die für ihn relevanten Inhalte heraussuchen müsste. Auch wird ein regelmäßiges Vor- und Zurückspringen im zeitlichen Ablauf des Videos zumindest teilweise obsolet. Ein solches Vor- und Zurückspringen im zeitlichen Ablauf des Videos ist heute regelmäßig erforderlich, um den Inhalt von Lernvideos zu erfassen. Das gilt insbesondere dann, wenn in längeren Videos komplexe Aktionen erklärt sind. Beispiele sind Videos zum Erläutern einer Installation eines Computerprogramms, Videos zum Erklären einer Handarbeit etc. Oft ist es so, dass der Benutzer große Teile des Inhalts nur mit einem geringen Maß an Aufmerksamkeit schaut, weil ihm die dort erklärten Aktionen bekannt oder eingängig sind. Wenn dann kurzzeitig eine Aktion erklärt wird, die eine erhöhte Aufmerksamkeit des Benutzers erfordert, weil dem Benutzer diese Aktion nicht geläufig ist, wird dies für den Benutzer häufig erst retrospektiv deutlich und ein Rückspulen bzw. Zurückspringen ist erforderlich. Durch eine Verwendung der hier vorgeschlagenen Interaktionstechnologie ist es möglich, Benutzer besonders effizient mit einem Video interagieren zu lassen und ein solches ungezieltes Vor- und Zurückspringen im Video zumindest teilweise obsolet zu machen.

Im Rahmen einer derartigen Interaktion ist es außerdem möglich, dem Benutzer weitere Inhalte zu im Video dargestellten Objekten zur Verfügung zu stellen. Sind dem Benutzer die in dem im Video dargestellten Objekte nicht bekannt (beispielsweise wenn die Objekte Darstellungen von Organen sind und ein nicht medizinisch ausgebildeter Benutzer die in dem Video dargestellten Organe nicht kennt und/oder Organe in dem Video nicht identifizieren kann), so wäre die Suche nach den entsprechenden Inhalten normalerweise sehr schwierig. Derartige Schwierigkeiten können mit dem beschriebenen Verfahren umgangen werden. Der Benutzer kann unter Ausnutzung der zeitlich veränderlichen Darstellung von Inhalten durch ein Video mit dem Datenverarbeitungssystem interagieren. Insbesondere kann mit dem beschriebenen Verfahren eine Interaktion des Benutzers mit dem Datenverarbeitungssystem ermöglicht werden, die entsprechend der zeitlich veränderlichen Darstellung des Videos ebenso zeitlich veränderlich ist.

Der Begriff des Datenverarbeitungssystems ist hier weit auszulegen. In Betracht kommt jedes System, das zur Bereitstellung, Verarbeitung und/oder Speicherung von Inhalten für einen Benutzer und zur Interaktion des Benutzers bestimmt und eingerichtet ist. Beispielsweise kann es sich bei dem Datenverarbeitungssystem um einen Heimcomputer, einen Fernseher (insbesondere einen sogenannten Smart-TV), einen Bordcomputer eines Kraftfahrzeugs, ein Smartphone oder ein Tablet handeln. Bevorzugt weist das Datenverarbeitungssystem zumindest eine Anzeigevorrichtung auf. Als Anzeigevorrichtung kann dabei ein Bildschirm oder Monitor dienen. Alternativ kann auch ein Projektor vorgesehen sein, der eine optische Darstellung von Inhalten auf einer Oberfläche wie beispielsweise einer Leinwand ermöglicht. Speziell für dreidimensionale Videodaten können auch Anzeigevorrichtungen zur Ausgabe von dreidimensionalen Daten verwendet werden, beispielsweise 3D-Brillen. Weiterhin umfasst das Datenverarbeitungssystem bevorzugt eine Eingabevorrichtung und zwar insbesondere eine Eingabevorrichtung, mit welcher der Benutzer einen Punkt und/oder eine Region auf einer Fläche auswählen kann. Dies gilt insbesondere für übliche zweidimensionale Videodaten unabhängig davon, ob diese Videodaten für eine ebene Darstellungsfläche oder für eine gekrümmte Darstellungsfläche gedacht sind. Im Falle von dreidimensionalen Videodaten kommen gegebenenfalls Eingabevorrichtungen zum Einsatz, mit welchen Punkte und/oder Regionen in dreidimensionalen Daten auswählbar sind.

Bei der Eingabevorrichtung kann es sich beispielsweise um eine Tastatur, eine Computermaus oder einen Touchscreen handeln. Im Falle eines dreidimensionalen Videos kann es sich bei der Eingabevorrichtung auch um einen Datenhandschuh handeln, welcher eine Interaktion mit bestimmten (räumlichen) Bereichen innerhalb des dreidimensionalen Videos ermöglicht. Für die Eingabevorrichtung kann grundsätzlich jede geeignete Eingabetechnologie verwendet werden. Über die Eingabevorrichtung kann der Benutzer mit dem Datenverarbeitungssystem interagieren. Unter Interagieren ist hier insbesondere zu verstehen, dass der Benutzer durch eine Handlung (wie beispielsweise das Betätigen einer Taste einer Computermaus) beeinflussen kann, welche weiteren Aktionen das Datenverarbeitungssystem ausführt.

In Schritt a) wird das Video wiedergegeben. Das erfolgt bevorzugt derart, dass das Video mit der Anzeigevorrichtung des Datenverarbeitungssystems für den Benutzer sichtbar wiedergegeben wird. Zur Wiedergabe des Videos ist auf dem Datenverarbeitungssystem bevorzugt eine Wiedergabekomponente (insbesondere eine Wiedergabesoftware) bereitgestellt. Bei der Wiedergabekomponente handelt es sich bevorzugt um einen Video-Player, der insbesondere in einem Browser eines Computers integriert ist. Die zur Wiedergabe des Videos benötigten Videoinhalte werden durch den ersten Datenstrom bereitgestellt, der von dem Datenverarbeitungssystem geladen und verarbeitet wird. Der erste Datenstrom kann insbesondere eine Computerdatei umfassen, in der das Video in einem Video-Dateiformat kodiert ist (Video-Datei). Als Dateiformate kommen insbesondere alle gängigen Videodateiformate in Betracht, beispielsweise wmv-Formate [wmv = Windows Media Video], mpeg-Formate [mpeg = Moving Pictures Experts Group], avi-Formate [avi = Audio Video Interleaved], mov-Formate [mov = Movie], flv-Formate [flv = Flash Video] oder rm-Formate [rm = Real Media]. Der erste Datenstrom kann beispielsweise in einem Speicher (wie einer Festplatte, einem USB-Stick, einer DVD oder einer CD) vorgehalten sein und durch das Datenverarbeitungssystem von diesem geladen werden. Auch kann der erste Datenstrom über eine Internetverbindung und/oder über eine lokale Netzwerkverbindung bereitgestellt werden. Insbesondere in dem Fall kann das Wiedergeben des Videos auch als Streaming bezeichnet werden.

Der Begriff der Videodarstellungsebene wird hier zur Veranschaulichung der Darstellung der Anzeigevorrichtung verwendet und dient insbesondere zur Abgrenzung von der mindestens einen Aktivierungsebene. Eine derartige Beschreibung einer Darstellung mit verschiedenen Ebenen ist insbesondere auch bei Grafikprogrammen üblich. Die Ebenen müssen nicht räumlich/körperlich oder tatsächlich vorhanden sein. Die Ebenen geben insbesondere eine Reihenfolge vor in welcher einzelne in den Ebenen enthaltene Objekte (der Videoplayer, Aktivierungsbereiche etc.) auf einer Anzeigevorrichtung dargestellt werden. Dabei können diese Objekte sich gegenseitig überlappen.

Gemäß Schritt b) wird mindestens ein Aktivierungsbereich in einer Aktivierungsebene bereitgestellt. Dazu ist bevorzugt eine Bereitstellungskomponente vorgesehen, die zur Bereitstellung des Aktivierungsbereichs dient. Die Bereitstellungskomponente ist insbesondere eine Bereitstellungssoftware und beispielsweise ein Computerprogramm, der in dem zweiten Datenstrom enthaltene Datensätze zu dem Aktivierungsbereich umsetzen kann. Der Aktivierungsbereich wird dem Video insbesondere überlagert. Der Begriff "Überlagern" ist hier funktional auszulegen. Es kommt nicht darauf an, dass die Aktivierungsbereiche und die Aktivierungsebenen tatsächlich physikalisch überlagern. Wesentlich ist vielmehr, dass die Videodarstellungsebene und die Aktivierungsebene softwaremäßig voneinander getrennt sind und dass die Aktivierungsebene bzw. der Aktivierungsbereich für den Benutzer aktivierbar ist. Im Falle einer Implementierung des Verfahrens in einem Browser mit der Programmiersprache HTML können die Videodarstellungsebene und die Aktivierungsebene insbesondere durch übereinander liegende Bereiche realisiert sein, die insbesondere mit dem <div>-Attribut erzeugt sein können. Der Aktivierungsbereich beziehungsweise die zugehörige Aktivierungsebene kann beispielsweise auch als ein Overlay des Videos bezeichnet werden. Die Bereitstellungskomponente kann beispielsweise in Javascript und/oder jQuery implementiert sein. Es ist aber auch jede andere Programmiersprache und Programmierumgebung zur Implementierung der Bereitstellungskomponente verwendbar.

Der mindestens eine Aktivierungsbereich ist bevorzugt derart ausgeführt, dass der Benutzer durch Anklicken des Aktivierungsbereichs mittels einer Computermaus oder mittels eines Touchscreens eine dem jeweiligen Aktivierungsbereich zugeordnete Aktion auslöst. Der mindestens eine Aktivierungsbereich kann insbesondere als eine Art Schaltfläche ausgeführt sein, die den Benutzer nach Art eines Links von einer Internetseite (auf der das Video wiedergegeben wird) zu einer anderen Internetseite leitet. Es ist für die Funktionsweise nicht entscheidend, ob der Aktivierungsbereich in irgendeiner Weise sichtbar hervorgehoben ist oder nicht. Dies ist insbesondere durch in der Aktivierungsebene angeordnete Designelemente möglich. Beispielsweise kann hier eine sichtbare Umrandung des Aktivierungsbereichs vorgesehen sein. Der Aktivierungsbereich kann aber auch ganz bewußt ohne jede optische Markierung ausgeführt sein und damit insbesondere transparent bzw. unsichtbar sein. Der Benutzer kann jedenfalls das mit dem Aktivierungsbereich assoziierte Objekt sehen. Wenn der Benutzer den Aktivierungsbereich in der Aktivierungsebene anklickt, so kann dem Benutzer dies optisch, beispielsweise durch eine Änderung der Darstellung, oder anders, beispielsweise durch eine taktile Rückmeldung, angezeigt werden.

Bevorzugt ist einem oder mehreren in dem Video dargestellten Objekten jeweils ein Aktivierungsbereich zugeordnet. Der Aktivierungsbereich entspricht bevorzugt zu jedem Zeitpunkt der Form und der Position des dargestellten Objekts. Dies bezieht sich insbesondere auf die Form und die Position einer (fiktiven) Umrandungslinie um das Objekt herum. Es ist regelmäßig und insbesondere bei transparent bzw. unsichtbar ausgeführten Aktivierungsbereichen regelmäßig nicht erforderlich, dass sich die gedachte Umrandungslinie und die Form des Objekts exakt entsprechen. Der Benutzer sieht transparente Aktivierungsbereiche nicht, sondern nimmt diese Bereiche nur aufgrund ihrer Aktivierbarkeit war. Der Benutzer ist ohnehin eher gewohnt Objekte zentral anzuklicken. Insofern ist eine sichere Aktivierbarkeit durch den Benutzer auch gewährleistet, wenn die Form und die Position des Aktivierungsbereichs der Form und der Position des Objekts nur insoweit entspricht wie dies erforderlich ist, damit beim Benutzer das Gefühl einer exakten Entsprechung auftritt. Bewegt sich also ein Objekt durch das wiedergegebene Video, so kann der Benutzer bevorzugt zu jedem Zeitpunkt durch Anklicken innerhalb der Umrandungslinie des Aktivierungsbereichs des jeweiligen Objekts eine diesem Objekt zugewiesene Aktion auslösen.

Bei dem mindestens einen Aktivierungsbereich handelt es sich um einen Bereich der Anzeigevorrichtung des Datenverarbeitungssystems, der jedenfalls teilweise mit der Videodarstellungsebene überlappt. Die Videodarstellungsebene ist bevorzugt als derart begrenzt zu verstehen, dass die Videodarstellungsebene nur den Bereich der Anzeigevorrichtung umfasst, in dem das Video wiedergegeben wird. Bevorzugt haben die Aktivierungsebenen eine Ausdehnung, die der Ausdehnung der Videodarstellungsebene entspricht, wobei die Aktivierungsebenen und die Videodarstellungsebene vollständig und genau passend überlappen.

Sind mehrere Aktivierungsbereiche vorgesehen, so überlappen diese einander bevorzugt nicht. Bevorzugt ist jedem Punkt der Videodarstellungsebene entweder kein Aktivierungsbereich oder genau ein Aktivierungsbereich zugeordnet.

Es ist möglich, dass mehrere Aktivierungsbereiche in einer Aktivierungsebene angeordnet sind. Es ist aber auch möglich, dass für jeden Aktivierungsbereich eine eigene Aktivierungsebene existiert, in welcher der jeweilige Aktivierungsbereich angeordnet ist. Wenn mehrere Aktivierungsebenen existieren können diese gemäß einer definierten Ebenenreihenfolge sortiert sein.

Wenn überlappende Aktivierungsbereiche vorgesehen sind, so ist im Überlappungsbereich üblicherweise der Aktivierungsbereich aktivierbar, dessen Aktivierungsebene gemäß einer Ebenenreihenfolge weiter oben angeordnet ist. Klickt der Benutzer beispielsweise mit einer Computermaus in den Überlappungsbereich mehrerer Aktivierungsbereiche, so wird bevorzugt die Aktion ausgelöst, die dem Aktivierungsbereich der weiter oben angeordneten Aktivierungsebene zugeordnet ist.

Daten zu dem mindestens einen Aktivierungsbereich (insbesondere Daten hinsichtlich der durch eine Aktivierung des mindestens einen Aktivierungsbereichs auszulösenden Reaktion, Parameter zu Form und Position des mindestens einen Aktivierungsbereichs) sowie gegebenenfalls auch zur optischen Gestaltung des Aktivierungsbereichs sind in dem zweiten Datenstrom bereitgestellt. Optional ist in dem zweiten Datenstrom weiterhin ein Parameter enthalten, der eine Reihenfolge der Aktivierungsebenen vorgibt. Der zweite Datenstrom eines Aktivierungsbereichs umfasst bevorzugt eine oder mehrere Dateien oder ein oder mehrere Datenfolgen.

Die beschriebenen Parameter sind bevorzugt für jeden Zeitpunkt des Videos angegeben und in dem zweiten Datenstrom hinterlegt. Dabei bezieht sich der Begriff des Zeitpunkts des Videos auf eine diskrete Unterteilung der Laufzeit des Videos, insbesondere entsprechend der das Video darstellenden Einzelbilder (Frames). Das bedeutet, dass das Video bevorzugt in eine Vielzahl von diskreten Zeitpunkten unterteilt ist, wobei jedem Zeitpunkt jeweils ein Einzelbild des Videos sowie mindestens ein Parameter der beschriebenen Art hinsichtlich des mindestens einen Aktivierungsbereichs zugeordnet ist. Bevorzugt existiert für jedes Einzelbild (jeden Frame) ein Datensatz in dem zweiten Datenstrom. Hier soll noch darauf hingewiesen werden, dass die Einzelbilder des Videos gegebenenfalls nicht als abgeschlossener Datenblock in dem ersten Datenstrom vorliegen müssen. In vielen Videoformaten werden Einzelbilder aus einer Vielzahl Einzelwerten aufgebaut, die auch für eine Mehrzahl von Einzelbildern gelten können. Dies gelingt beispielsweise durch Rückwärts-Referenzierungen auf vorhergehende Einzelbilder. Insofern ist mit dem Begriff "Einzelbild" hier nicht ein konkreter Abschnitt des ersten Datenstroms gemeint, sondern der Bildinhalt, den eine Wiederkomponente zu einem bestimmten Zeitpunkt darstellt.

Ein Video beinhaltet beispielsweise pro Sekunde Videolänge eine bestimmte, festgelegte Anzahl an Frames (bspw. 25 Frames), die in dem ersten Datenstrom enthalten sind. Dann existieren bevorzugt auch pro Sekunde eine entsprechende Anzahl von Datensätzen in dem zweiten Datenstrom.

Ein zweiter Datenstrom kann beispielsweise in einem Speicher (wie einer Festplatte, einem USB-Stick, einer DVD oder einer CD) vorgehalten sein und durch das Datenverarbeitungssystem von diesem Speicher geladen werden. Auch können die zweiten Datenströme über eine Internetverbindung und/oder über eine lokale Netzwerkverbindung bereitgestellt werden. Verschiedene der zweiten Datenströme können aus verschiedenen Quellen oder aus einer gemeinsamen Quelle bereitgestellt werden.

Mit dem beschriebenen Verfahren wird es insbesondere möglich, dass ein Benutzer sich bewegende Objekte in dem Video anklicken kann. Das kann insbesondere dadurch ermöglicht werden, dass gemäß dem beschriebenen Verfahren für den mindestens einen Aktivierungsbereich eine Veränderung vorgegeben ist. Die Veränderung entspricht bevorzugt der Veränderung des entsprechenden Objekts. Bei der Veränderung kann es sich beispielsweise um eine Verschiebung, eine Formveränderung und/oder um eine Änderung der optischen Gestaltung des mindestens einen Aktivierungsbereichs handeln. Bewegt sich beispielsweise ein Objekt von rechts nach links durch das Video und wird dabei kleiner, so besteht die Veränderung des entsprechenden Aktivierungsbereichs bevorzugt in einer entsprechenden Verschiebung von rechts nach links und in einer entsprechenden Verkleinerung.

Mit der Synchronisierung einer Veränderung des mindestens einen Aktivierungsbereichs mit der Wiedergabe des Videos ist hier Synchronisation einer Veränderung des mindestens einen Aktivierungsbereichs mit in dem Video dargestellten Vorgängen gemeint. Der Begriff "Vorgang" umfasst hier alles was in dem Video passiert und insbesondere Bewegungen von in dem Video dargestellten Objekten. Hier sind Bewegungen in der Darstellungsebene des Videos gemeint, und keine tatsächlichen Bewegungen von Objekten, die während der Videoaufhahme stattfinden. Bewegungen von Objekten in der Darstellungsebene entstehen einmal durch eine Bewegung von Objekten während der Aufnahme und andererseits auch durch eine Bewegung oder Veränderung einer Kamera mit der die Aufnahme erfolgt. Ein Zoomen der Kamera kann beispielsweise auch zu einer Bewegung eines Objekts in der Darstellungsebene führen. Gegebenenfalls können sowohl Bewegungen einer Kamera als auch tatsächliche Bewegungen von Objekten zusammen auftreten. Es sind auch Fälle möglich bei welchen sich tatsächliche Bewegungen von Objekten und Kamerabewegungen gegenseitig zumindest teilweise aufheben, so dass keine oder nur eine reduzierte Bewegung in der Darstellungsebene entsteht.

Die Veränderung des mindestens einen Aktivierungsbereichs ist zumindest teilweise mit Vorgängen in dem Video synchronisiert. Unter einem Vorgang in dem Video kann zunächst der reine Zeitablauf beim Wiedergeben des Videos verstanden werden. Darüber hinaus stellt aber insbesondere auch eine Bewegung und/oder Veränderung eines in dem Video dargestellten Objektes einen Vorgang in dem Video dar.

Die zeitliche Synchronisation zwischen der Veränderung mindestens eines Aktivierungsbereichs und einem Vorgang in dem Video erfolgt vorzugsweise derart, dass jedem Zeitpunkt des Videos eine jeweilige Ausgestaltung des mindestens einen Aktivierungsbereichs zugeordnet ist. Wird das Video wiedergegeben, wird der mindestens eine Aktivierungsbereich bevorzugt in der den einzelnen Zeitpunkten des Videos zugeordneten Art (Form/Größe und Position) bereitgestellt. Dabei meint der Begriff "bereitgestellt", dass der Aktivierungsbereich für den Benutzer aktivierbar ist und (sofern der Aktivierungsbereich als für den Benutzer sichtbar vorgesehen ist) angezeigt wird. Die zeitliche Synchronisation stellt insbesondere sicher, dass die gewünschte Zuordnung von Veränderungen des mindestens einen Aktivierungsbereichs zu in dem Video dargestellten Vorgängen immer erhalten bleibt, insbesondere auch bei einer Unterbrechung des Videos (ob durch eine Pause oder einen Stop) oder durch eine Beschleunigung oder Verlangsamung des Videos.

Es wird durch die Synchronisation beispielsweise verhindert, dass der mindestens eine Aktivierungsbereich nicht auf dem Objekt im Video angeordnet ist, für welche der jeweilige Aktivierungsbereich vorgesehen ist. So etwas könnte durch eine nicht vorhandene oder fehlerhafte Synchronisation auftreten.

Weiterhin ist die Veränderung des mindestens einen Aktivierungsbereichs insbesondere nach ihrer Art zumindest teilweise mit Vorgängen in dem Video synchronisiert. Das bedeutet insbesondere, dass die Veränderung eines Aktivierungsbereichs bevorzugt derart erfolgt, dass der jeweilige Aktivierungsbereich einem Objekt in dem Video folgt. Besonders bevorzugt entspricht der jeweilige Aktivierungsbereich dabei zu jedem Zeitpunkt (jedenfalls für einen Teil der Laufzeit des Videos) der Form und Größe des entsprechenden Objekts. Mithin erfolgt die Veränderung des mindestens einen Aktivierungsbereichs nicht willkürlich. Es ist aber auch möglich, dass der mindestens eine Aktivierungsbereich nicht genau der Form und Position des zugeordneten Objekts entspricht. Beispielsweise kann der mindestens eine Aktivierungsbereich zu jedem Zeitpunkt doppelt so groß sein wie das zugeordnete Objekt und sich im Rahmen dieser Maßgabe mit dem Objekt synchronisiert verändern. Auch ist es möglich, dass sich der mindestens eine Aktivierungsbereich zu einzelnen Zeitpunkten im Verhältnis zu dem zugeordneten Objekt verändert. Beispielswiese kann ein Aktivierungsbereich zunächst genau einem Objekt entsprechen, anschließend für einen Zeitabschnitt die doppelte Größe des Objekts annehmen und schließlich dem Objekt wieder genau entsprechen. Auch kann sich das Verhältnis zwischen einem Aktivierungsbereich und dem zugeordneten Objekt kontinuierlich verändern. Beispielsweise kann der Aktivierungsbereich zunächst der doppelten Größe eines Objekts entsprechen und über die Laufzeit des Videos kontinuierlich verkleinern, bis schließlich die Größe des Objekts erreicht ist. Bevorzugt ist jedenfalls, dass die Veränderung des Aktivierungsbereichs hinreichend kausal mit einem Vorgang in dem Video zusammenhängt.

Die zeitliche Synchronisation wird insbesondere dadurch erreicht, dass die Frequenz von Framewechseln im Video exakt bekannt ist und die im zweiten Datenstrom enthaltenen Datensätze von dem Datenverarbeitungssystem exakt entsprechend zur Frequenz von Framewechseln im Video verarbeitet werden. Das Video in der Videodarstellungsebene und der mindestens eine Aktivierungsbereich in der Aktivierungsebene werden also mit derselben Geschwindigkeit wiedergegeben bzw. bereitgestellt. Darüber hinaus wird sichergestellt, dass die Wiedergabe des Videos in der Videodarstellungsebene und die Bereitstellung des Aktivierungsbereichs in der Aktivierungsebene exakt zum selben Zeitpunkt beginnt. Das kann beispielsweise durch ein gemeinsames Auslöseereignis realisiert werden, welches zum Start der Wiedergabe des Videos und zum Start der Bereitstellung des Aktivierungsbereichs genutzt wird.

Bevorzugt werden Kontrollkomponenten zur Kontrolle des Videos bzw. zur Kontrolle der Wiedergabekomponente zur Wiedergabe des Videos (beispielsweise Links, die zum Pausieren, Stoppen oder zum Neustart oder zum schnelleren Abspielen des Videos genutzt werden) verwendet, ständig überwacht, um die Bereitstellung des mindestens einen Aktivierungsbereichs ebenfalls entsprechend anzupassen (zu Pausieren, zu Stoppen, neu zu Starten oder schneller abzuspielen), wenn eine entsprechende Beeinflussung der Wiedergabe des Videos mit diesen Kontrollkomponenten erfolgt. Dies geschieht üblicherweise mit einer Steuerungskomponente, welche zumindest zur Steuerung des mindestens einen Aktivierungsbereichs dient. Kontrollkomponenten zur Kontrolle des Videos übermitteln üblicherweise Kontrollsignale, die zur Steuerung des Videos dienen. Durch die Bezeichnung als "Kontroll"-Signale wird hier zum Ausdruck gebracht, dass der Benutzer mit diesen Signalen die Wiedergabe des Videos kontrolliert. Die Bezeichnung als "Steuer"-Signale bringt hier zum Ausdruck, dass über diese Signale etwas (insbesondere die Wiedergabe des Videos und/oder die Bereitstellung der Aktivierungsbereiche) gesteuert wird. Die Kontrollsignale sind häufig zugleich erste Steuerungssignale zur Steuerung des Videos, die beispielsweise zur Steuerung der Wiedergabe des Videos in einem Videoplayer dienen.

In einigen Ausführungsformen ist es möglich aus der Wiedergabekomponente zur Wiedergabe des Videos Überwachungssignale zu extrahieren, die Daten über die Wiedergabe des Videos beinhalten. Solche Überwachungssignale können genutzt werden, um die Bereitstellung des mindestens einen Aktivierungsbereichs zu der Wiedergabe des Videos zu synchronisieren. Überwachungssignale können beispielsweise eine Framenummer des Videos beinhalten, wenn diese Framenummer aus der Wiedergabekomponente extrahierbar ist. Eine solche Framenummer kann genutzt werden, um den richtigen Datensatz im zweiten Datenstrom hinsichtlich des Aktivierungsbereichs auszuwählen. Alternativ kann ein Überwachungssignal auch von einer Überwachungskomponente erzeugt werden, welche die Darstellung des Videos überwacht, um ein Überwachungssignal zu erzeugen. Beispielsweise kann ein Bereich des Videos überwacht werden. Aus dem was in diesem Abschnitt des Videos dargestellt ist, wird ein Überwachungssignal beispielsweise mit einer Hashfunktion gebildet. Die Datensätze in dem zweiten Datenstrom können so indexiert sein, dass diese über ein so gebildetes Überwachungssignal auswählbar sind. Eine solche Vorgehensweise ist insbesondere dann vorteilhaft, wenn eine Framenummer aus der Wiedergabekomponente nicht extrahierbar ist.

Bevorzugt verarbeitet die Steuerungskomponente diese Kontrollsignale zur Kontrolle des Videos, um hieraus zweite Steuerungssignale zur Steuerung des mindestens einen Aktivierungsbereichs zu erzeugen. Die Steuerungskomponente ist bevorzugt so ausgelegt, dass bei der Erzeugung von zweiten Steuerungssignalen aus Kontrollsignalen eine maximale Zeitverzögerung auftritt, die nicht zu einem für einen Benutzer erkennbaren Nachlauf des Aktivierungsbereichs relativ zu den Videoinhalten führt.

Es ist auch möglich, dass die Steuerungskomponente als eine Art Zwischenebene oder auch "Middleware" zwischen Kontrollkomponenten und der Wiedergabekomponente angeordnet ist und sowohl zweite Steuersignale zur Steuerung der Bereitstellungskomponente für den mindestens einen Aktivierungsbereich als auch erste Steuersignale für die Wiedergabekomponente zur Wiedergabe des Videos erzeugt. Insbesondere wenn die Wiedergabekomponente ein üblicher Video-Player ist, welcher selbst Kontrollkomponenten aufweist, dann sind diese dem Video-Player zugeordneten Kontrollkomponenten bevorzugt deaktiviert und besonders bevorzugt für den Nutzer auch nicht sichtbar. Es existieren dann bevorzugt zusätzliche Kontrollkomponenten, die durch die Steuerungskomponente von dem Video-Player getrennt sind, und über die eine Kontrolle des Videos möglich ist.

In noch einer weiteren Ausführungsvariante werden erste Steuerungssignale zur Steuerung der Wiederkomponente bzw. Kontrollsignale nicht nur an die Wiedergabekomponente sondern zusätzlich auch an die Steuerungskomponente übertragen. Die Steuerungskomponente ist dann bevorzugt dazu eingerichtet aus ersten Steuerungssignalen zur Steuerung des Videos zweite Steuerungssignale zur Steuerung der Bereitstellungskomponente zu erzeugen.

Die verschiedenen hier beschriebenen Vorgehensweisen und Komponenten zur Synchronisation sind bevorzugt als Software implementiert. Bevorzugt ist zumindest eine der genannten Komponenten zumindest teilweise mit den Programmiersprachen Java-Script und/oder jQuery implementiert.

Es ist bevorzugt nicht notwendig, dass der mindestens eine Aktivierungsbereich für die gesamte Laufzeit des Videos definiert ist (und entsprechend während der gesamten Laufzeit des Videos aktivierbar ist und gegebenenfalls dargestellt wird). Jedenfalls ist es bevorzugt, dass der mindestens eine Aktivierungsbereich während der gesamten Laufzeit des Videos aktivierbar ist. Es ist aber auch möglich, dass der mindestens eine Aktivierungsbereich für einen Teil der Laufzeit des Videos nur dargestellt (d.h. dem Benutzer angezeigt) wird, ohne aktivierbar zu sein. Auch ist es möglich, dass der mindestens eine Aktivierungsbereich während der gesamten Laufzeit des Videos nicht aktivierbar ist. Für einen derartigen Aktivierungsbereich ist aber bevorzugt jedenfalls die Möglichkeit vorgesehen, den Aktivierungsbereich selbst durch eine weitere Aktion aktivierbar zu machen. Eine solche Aktion kann beispielsweise die Aktivierung eines anderen Aktivierungsbereichs oder ein (externes) Signal sein, das durch mindestens eine außerhalb des beschriebenen Verfahrens liegende Aktion des Benutzers ausgelöst wird. Weiterhin ist bevorzugt, dass jedenfalls ein Aktivierungsbereich vorgesehen ist, der zumindest während eines Teils der Laufzeit des Videos aktivierbar ist.

Der zweite Datenstrom aus Schritt b) ist von dem ersten Datenstrom aus Schritt a) getrennt. Insbesondere ist das in dem ersten Datenstrom enthaltene Video in keiner Weise beeinflusst, beeinträchtigt oder verändert. Ohne den zweiten Datenstrom und das beschriebene Verfahren enthält das Video keinerlei Daten hinsichtlich der Aktivierungsbereiche. Ein normales Video, welches linear (von vorne nach hinten) betrachtet werden kann, wird durch das beschriebene Verfahren interaktiv. Das Original-Videomaterial im ersten Datenstrom bleibt völlig unbearbeitet.

Diese Trennung von dem ersten Datenstrom und dem zweiten Datenstrom ist softwareseitig implementiert. Beispielsweise können der erste Datenstrom und der zweite Datenstrom voneinander getrennte Datenströme sein, die parallel zueinander oder nacheinander übertragen werden. Insbesondere ist es auch möglich, dass der erste Datenstrom und der zweite Datenstrom voneinander getrennte Dateien aufweisen. Auch ist es möglich, dass für den ersten Datenstrom und den zweiten Datenstrom unterschiedliche Übertragungsverfahren verwendet werden. Beispielsweise ist es denkbar, dass der erste Datenstrom (mit den Videodaten) als Antwort auf eine Anfrage (einen request) geliefert wird und damit sozusagen als eine Datei oder als ein Paket geliefert wird, während der zweite Datenstrom als Antwort auf eine Vielzahl von einzelnen Anfragen (requests) geliefert wird, welche während des Abspielens des Videos jeweils abgesendet und verarbeitet werden. Auch in dieser Ausführungsvariante ist eine klare Trennung zwischen dem ersten Datenstrom und dem zweiten Datenstrom existent.

In einer weiteren bevorzugten Ausführungsform des Verfahrens ist mindestens ein charakteristischer Punkt in dem Video definiert, dem für eine Vielzahl von Zeitpunkten des Videos eine jeweilige Koordinatenangabe in einem das Video überlagernden Koordinatensystem zugeordnet ist, wobei in Schritt b) die Veränderung des mindestens einen Aktivierungsbereichs unter Verwendung der Koordinatenangaben des mindestens einen charakteristischen Punkts erfolgt. Diese Koordinatenangaben sind in dem zweiten Datenstrom beispielsweise als Datensätze für jeden Frame des Videos enthalten.

Gemäß Schritt b) ist für den mindestens einen Aktivierungsbereich eine Veränderung vorgegeben, die zumindest teilweise mit Vorgängen in dem Video synchronisiert ist. Dies ist insbesondere eine Synchronisierung nach Art und Zeitpunkt, d.h. das Art (die Form oder irgend eine Andere Eigenschaft des Aktivierungsbereichs) sich in Abhängigkeit von dem jeweiligen Zeitpunkt des Videos verändert. In der vorliegenden Ausführungsform kann diese Synchronisation auf besonders effiziente Weise erreicht werden.

Dazu wird der mindestens eine charakteristische Punkt definiert. Bei dem mindestens einen charakteristischen Punkt handelt es sich bevorzugt um eine Stelle in dem Video, anhand derer ein Objekt in dem Video zu verschiedenen Zeitpunkten identifiziert werden kann. Bevorzugt wird als charakteristischer Punkt ein Punkt gewählt, der sich gegenüber seiner Umgebung derart auszeichnet, dass eine automatisierte Erfassung der Position des charakteristischen Punktes zu jedem Zeitpunkt möglich ist. Das ist insbesondere der Fall bei Punkten in dem Video, die sich durch Farbe, Helligkeit und/oder Kontrast von ihrer Umgebung abheben. Eine automatische Erfassung der Position des charakteristischen Punktes kann insbesondere dazu genutzt werden Koordinatenangaben des charakteristischen Punktes für jeden Zeitpunkt des Videos zu bestimmen.

Zur Bezeichnung insbesondere der Position des mindestens einen charakteristischen Punkts und des mindestens einen Aktivierungsbereichs wird der Videodarstellungsebene bevorzugt ein Koordinatensystem zugeordnet. Beispielsweise kann die untere Seite der Videodarstellungsebene als eine x-Achse und die linke Seite der Videodarstellungsebene als eine y-Achse verwendet werden. Der Nullpunkt liegt dann beispielsweise in der linken unteren Ecke der Videodarstellungsebene. Eine Koordinatenangabe ist in dem Fall bevorzugt ein Koordinatenpaar, das jeweils eine x-Koordinate und eine y-Koordinate umfasst. Synonym kann auch ein Koordinatensystem verwendet werden, welches von oben nach unten und von links nach rechts definiert ist, so dass jeder Punkt mit über einen vertikalen Abstand (top) und einen horizontalen Abstand (left) von der linken, oberen Ecke des Videos definiert ist.

Das Video wird bevorzugt als eine Vielzahl von Pixeln (Bildpunkten) dargestellt. Bevorzugt sind die Koordinaten entsprechend dieser Pixel diskret angegeben. Insbesondere ist es bevorzugt, dass die Koordinaten als einheitenlose Zahlen angegeben werden, die einer Pixel-Anzahl entsprechen. Alternativ ist es auch möglich, alle Pixel mit einer fortlaufenden Nummer zu kennzeichnen (entsprechend einer einzelnen Koordinate). Eine Koordinatenangabe ist in dem Fall bevorzugt eine einheitenlose Zahl, die die (fortlaufende) Nummer des Pixels angibt. Wenn eine pixelgenaue Zuordnung von Koordinatenangaben zu charakteristischen Punkten nicht erforderlich ist (beispielsweise weil eine so genaue Definition der Position von charakteristischen Punkten für die Verwendbarkeit des beschriebenen Verfahrens nicht erforderlich ist), dann kann das Koordinatensystem auch gröber eingeteilt sein und beispielsweise diskret jeweils x Pixel (beispielsweise 5 oder 10 Pixel) mit einer fortlaufenden Nummer kennzeichnen.

Dem charakteristischen Punkt wird bevorzugt jedenfalls für einen Teil der (bevorzugt ebenfalls diskret angegebenen) Zeitpunkte des Videos eine jeweilige Koordinatenangabe zugeordnet. Beispielsweise existiert für jeden Frame eines Videos genau ein Datensatz mit Koordinatenangaben. Ggf. ist aber auch nur für jeden x-ten Frame (beispielsweise jeden 5-ten oder 10-ten Frame) eine Koordinatenangabe in dem zweiten Datenstrom enthalten.

In einer weiteren bevorzugten Ausführungsform des Verfahrens wird eine Position des mindestens einen Aktivierungsbereichs innerhalb der Aktivierungsebene entsprechend mindestens einer Koordinatenangaben eines charakteristischen Punkts in dem Video verändert.

Der Aktivierungsbereich kann beispielsweise durch eine Fläche fester Größe definiert werden, deren Position anhand der Koordinaten des charakteristischen Punkts bestimmbar ist. Es kann beispielsweise festgelegt sein, wie weit sich der Aktivierungsbereich in positive und negative x-Richtung und in positive und negative y-Richtung von den Koordinaten des charakteristischen Punkts erstreckt. Dadurch wird ein rechteckiger Aktivierungsbereich definiert, der über nur eine Koordinatenangabe positioniert werden kann.

In einem einfachen Beispiel bewegt sich ein Objekt durch das Video, wobei das Objekt eine farbig ausgefüllte Fläche mit einem schwarzen Punkt in der Mitte umfasst und wobei die Form des Objekts unverändert bleibt. Der schwarze Punkt wird hier bevorzugt als charakteristischer Punkt verwendet. Die Kenntnis der Position dieses charakteristischen Punkts genügt, um die Bewegung des Objekts zu beschreiben. In diesem Beispiel kann dem Objekt ein Aktivierungsbereich zugeordnet werden, indem der Aktivierungsbereich mit der Form des Objekts erstellt wird und an einer Position angeordnet wird, die über den charakteristischen Punkt für jeden Zeitpunkt des Videos festgelegt ist.

In einer weiteren bevorzugten Ausführungsform des Verfahrens wird eine Form des mindestens einen Aktivierungsbereichs entsprechend der Koordinatenangaben einer Mehrzahl von charakteristischen Punkten in dem Video verändert.

Soll ein Aktivierungsbereich einem Objekt zugeordnet werden, dessen Form (in einer Darstellungsebene) sich im Verlauf des Videos verändert, so wird dem Objekt bevorzugt eine Mehrzahl von charakteristischen Punkten zugeordnet. Ist das Objekt beispielsweise ein fahrendes Auto, das seitlich im Video gezeigt ist, so können beispielsweise dem Vorderreifen und dem Hinterreifen jeweils ein charakteristischer Punkt zugewiesen werden. Der Aktivierungsbereich kann entsprechend der Form des Autos erstellt werden. Durch Zuordnen des Vorderreifens und des Hinterreifens im Aktivierungsbereich zu dem jeweils entsprechenden charakteristischen Punkt kann der Aktivierungsbereich der Position des Autos im Video folgen und dabei entsprechend des Abstandes zwischen den beiden charakteristischen Punkten skaliert werden. Die Verwendung von zwei charakteristischen Punkten kann insbesondere dann sinnvoll sein, wenn ein dargestelltes Objekt nicht oder nur wenig aufgrund einer veränderlichen Kameraperspektive verzerrt wird. In Fällen mit einer solchen Verzerrung können weitere charakteristische Punkte verwendet werden. Je mehr charakteristische Punkte verwendet werden, umso genauer kann der Aktivierungsbereich nach Position und Form zu jedem Zeitpunkt mit einem zugeordneten Objekt übereinstimmen.

In einer einfachen Ausführungsvariante des Verfahrens bilden die charakteristischen Punkte eine Umrandungslinie des Aktivierungsbereiches, wenn man diese Punkte miteinander verbindet. Die Koordinaten der Punkte werden dann in dem zweiten Datenstrom als Datensätze übertragen. Dann wird der Aktivierungsbereich von der Bereitstellungskomponente erzeugt, in dem eine (virtuelle) Umrandungslinie anhand dieser Koordinaten erzeugt wird. In einer weiteren Ausführungsform enthalten die Datensätze des zweiten Datenstroms neben charakteristischen Punkten allerdings auch zusätzliche Daten (beispielsweise formdefinierende Parameter, die die Form des Aktivierungsbereichs definieren), welche in den verschiedenen Datensätzen des zweiten Datenstroms unterschiedlich sein können und welche eine Veränderung der Form des Aktivierungsbereichs steuern.

Weitere Ausführungsvarianten des Verfahrens basieren auf der Idee die Erzeugung des mindestens einen Aktivierungsbereichs anhand der tatsächlichen dreidimensionalen Form eines im Video dargestellten und mit dem Aktivierungsbereich erfassten Objekts durchzuführen, wenn das Objekt beispielsweise ein Kraftfahrzeug ist. Falls ein charakteristischer Punkt die vordere rechte Ecke und ein zweiter charakteristischer Punkt die hintere linke Ecke des Kraftfahrzeugs ist, dann kann anhand der Koordinaten dieser Punkte ein Aktivierungsbereich festgelegt werden, der den in dem Video sichtbaren Teil des Kraftfahrzeugs vollständig abdeckt, insbesondere wenn die Form des Autos bekannt ist. Formdefinierende Parameter müssen dann nicht für jeden Datensatz in dem zweiten Datenstrom einzeln übertragen werden, sondern diese Parameter sind immer gleich. In den Datensätzen des zweiten Datenstroms übermittelt werden immer nur die charakteristischen Punkte bzw. deren Koordinaten. Anhand der formdefinierenden Parameter wird aus den charakteristischen Punkten bzw. deren Koordinaten die Form des Aktivierungsbereichs ermittelt.

In einer weiteren bevorzugten Ausführungsform des Verfahrens erfolgt die Veränderung des mindestens einen Aktivierungsbereichs unter Verwendung einer zeitlich veränderlichen Anzahl von charakteristischen Punkten.

Je mehr charakteristische Punkte an einem Objekt definiert werden, umso genauer kann ein Aktivierungsbereich diesem Objekt zugeordnet werden. Insbesondere wenn das Objekt seine Form in erheblichem Maße (beispielsweise durch eine veränderliche Kameraperspektive) verändert, kann es vorteilhaft sein, eine Mehrzahl von charakteristischen Punkten für dieses Objekt zu verwenden. Je mehr charakteristische Punkte verwendet werden, umso größer ist regelmäßig aber auch eine aufzuwendende Rechenleistung und die Datenmenge des zweiten Datenstroms. Um diese zu reduzieren, kann die Anzahl der für ein Objekt verwendeten charakteristischen Punkte im Verlauf des Videos verändert werden. In einem einfachen Beispiel bewegt sich ein Objekt zunächst ohne Formveränderung durch das Video, wird dann in kurzer Zeit erheblich verformt und bewegt sich dann weiter unverändert durch das Video. In diesem Fall ist es bevorzugt, dass an dem Objekt zunächst nur ein charakteristischer Punkt definiert ist. Für die Dauer der Verformung werden bevorzugt mehrere charakteristische Punkte verwendet. Anschließend wird bevorzugt wieder nur ein charakteristischer Punkt verwendet.

In einer weiteren bevorzugten Ausführungsform ist der mindestens eine Aktivierungsbereich nur für einen Teil der Zeitpunkte des Videos in dem jeweiligen zweiten Datenstrom definiert, wobei diese Zeitpunkte zeitlich voneinander beanstandet sind, und wobei der jeweilige Aktivierungsbereich in dazwischenliegenden Zeitpunkten nach Art einer Interpolation bereitgestellt wird. Je nach Länge eines Videos und je nach Anzahl der Aktivierungsbereiche und Menge an Daten pro Aktivierungsbereich können die zweiten Datenströme große Datenmengen umfassen. Insbesondere wenn die zweiten Datenströme über http-Anfragen geladen werden, kann dies nachteilig sein. In der vorliegenden Ausführungsform kann die Datenmenge reduziert werden. Dazu werden nicht für jeden (bevorzugt diskret angegebenen) Zeitpunkt/Frame des Videos die Datensätze mit Daten bezüglich des mindestens einen Aktivierungsbereich übertragen.. Stattdessen kann dies beispielsweise nur für jeden n-ten Zeitpunkt/Frame erfolgen. In den dazwischenliegenden Zeitpunkten wird der jeweilige Aktivierungsbereich beispielsweise mit einer Interpolation erzeugt. Liegt ein Aktivierungsbereich beispielsweise in einem ersten Zeitpunkt und in einem dritten Zeitpunkt in gleicher Form und Position vor, so wird der Aktivierungsbereich vorzugsweise auch für einen zwischen dem ersten und dritten Zeitpunkt liegenden zweiten Zeitpunkt in dieser Form und Position bereitgestellt (d.h. als entsprechend aktivierbar vorgesehen und gegebenenfalls dargestellt). Ist der Aktivierungsbereich im ersten und dritten Zeitpunkt unterschiedlich definiert, wird der Aktivierungsbereich im zweiten Zeitpunkt bevorzugt insbesondere mit einer Form und Position bereitgestellt, die einem jeweiligen Mittelwert der entsprechenden Form und Position im ersten und dritten Zeitpunkt entsprechen. Das ist hier als Interpolation zu verstehen.

Die Anzahl der Zeitpunkte und der Abstand benachbarter Zeitpunkte, für die ein Aktivierungsbereich durch den zweiten Datenstrom definiert ist, können für verschiedene Aktivierungsbereiche und zu verschiedenen Zeitpunkten des Videos unterschiedlich sein. Bei schnell bewegten Objekten in dem Video wird bevorzugt nur über eine kurze Zeitspanne interpoliert, während in Zeitabschnitten ohne große Veränderungen auch über längere Zeitspannen interpoliert werden kann.

Wie erläutert ist der mindestens eine Aktivierungsbereich für den Benutzer bevorzugt unsichtbar bzw. nicht sichtbar.

Ist der mindestens eine Aktivierungsbereich derart ausgeführt, dass dieser zu jedem Zeitpunkt der Form und Position eines Objekts in dem Video entspricht, kann das entsprechende Objekt durch Aktivieren des Aktivierungsbereichs ausgewählt werden. Dazu ist es nicht erforderlich, dass der Aktivierungsbereich selbst für den Benutzer sichtbar ist. Das ist insbesondere der Fall, wenn in dem Video nur eine geringe Anzahl an Objekten dargestellt wird. Dabei kann dem Benutzer beispielsweise ein Erläuterungstext angezeigt werden, dass durch Anklicken der Objekte weitere Inhalte verfügbar sind. Eine besondere Kenntlichmachung der anklickbaren Objekte ist dabei nicht nötig.

In einer weiteren bevorzugten Ausführungsform des Verfahrens umfasst mindestens ein Aktivierungsbereich zumindest eine grafische Gestaltung aufweisend eines der folgenden Elemente:
- eine mit einer Farbe gefüllte Fläche,
- ein Bild,
- ein Text,
- ein geometrisches Objekt, und
- eine Schattierung.

Mit den beschriebenen Elementen kann der Benutzer auf die Möglichkeit hingewiesen werden, bestimmte Bereiche des Videos anzuklicken. Insbesondere können die anklickbaren Bereiche des Videos farbig gekennzeichnet werden. Dazu können insbesondere farbig gefüllte Flächen dienen, die (insbesondere genau) der Form eines anklickbaren Objekts in dem Video entsprechen. Bevorzugt ist der mindestens eine Aktivierungsbereich vollflächig ausgefüllt. Farbige Kennzeichnungen umfassen hier insbesondere auch Kennzeichnungen in Weiß, Schwarz und Grau. Es ist dabei insbesondere auch möglich, dass die Farben transparent dargestellt werden. Das bedeutet, dass ein von dem Aktivierungsbereich überlagertes Objekt in dem Video zumindest teilweise sichtbar bleibt.

Der mindestens eine Aktivierungsbereich ist bevorzugt über seine gesamte Ausdehnung von dem Benutzer anklickbar. Das bedeutet, dass die Funktionalität des Aktivierungsbereiches (also die Möglichkeit, diesen anzuklicken) über dessen gesamte Ausdehnung gegeben ist. Alternativ ist es aber auch möglich, dass einer oder mehrere der Aktivierungsbereiche zumindest teilweise oder vollständig nicht anklickbar sind. So kann ein Aktivierungsbereich die beschriebenen Elemente auch derart umfassen, dass diese nicht angeklickt werden können. Insbesondere ist es auch möglich, dass die Aktivierbarkeit nur zu bestimmten Zeiten oder während bestimmter Zeitabschnitte des Videos gegeben ist. Bevorzugt ist dabei, dass ein temporär nicht aktivierbarer Aktivierungsbereich oder Teil eines Aktivierungsbereichs anders dargestellt wird als ein aktivierbarer Aktivierungsbereich.

In einer weiteren bevorzugten Ausführungsform des Verfahrens wird in Schritt b) zumindest eine optische Gestaltung mindestens eines Aktivierungsbereichs zeitlich synchronisiert mit dem gemäß Schritt a) wiedergegebenen Video verändert.

Ist in dem Video beispielsweise ein Objekt dargestellt, das seine Farbe verändert, so kann auch der Aktivierungsbereich seine Farbe mit dem Vorgang im Video synchronisiert verändern. Dabei ist es nicht erforderlich, dass der Aktivierungsbereich zu jedem Zeitpunkt die Farbe des zugeordneten Objekts aufweist. Ändert das Objekt in dem Video beispielsweise seine Farbe von blau nach grün, kann der Aktivierungsbereich seine Farbe in irgendeiner Weise zeitlich synchron von rot nach weiß ändern.

In einer weiteren bevorzugten Ausführungsform wird das Verfahren in einem Browser ausgeführt.

Durch die Verwendung eines Browsers kann das beschriebene Verfahren insbesondere auf Videos angewendet werden, die im Internet bereitgestellt werden.

Bevorzugt wird das beschriebene Verfahren in einem Webbrowser durchgeführt, welcher HTML5 (Hypertext Markup Language 5) und CSS (Cascading Style Sheets) darstellen kann. Dieser Webbrowser wird bevorzugt auf dem Datenverarbeitungssystem ausgeführt und ist aus Sicht des hier beschriebenen Verfahrens auch als Bestandteil des Datenverarbeitungssystems zur Durchführung des beschriebenen Verfahrens zu betrachten. Die Verwendung dieser Programmiersprachen ist bevorzugt, weil diese Programmiersprachen eine hohe Funktionalität und insbesondere eine hohe Kompatibilität mit anderen Programmen aufweisen. Der Browser beinhaltet bevorzugt eine Video-Wiedergabesoftware beziehungsweise ein in den Browser integriertes Video-Wiedergabe-Plugin zur Wiedergabe des Videos, umfassend vorzugsweise Schaltflächen zum Steuern des Videos, insbesondere zum Starten, Unterbrechen und Beenden der Wiedergabe des Videos sowie zum Vorspulen und Zurückspulen. Die hinter diesen Schaltflächen liegende Funktionalität zum Steuern des Videos kann beispielsweise mit Java-Script oder Java programmiert sein. Die Aktivierungsebenen sind bei Verwendung eines derartigen Browsers bevorzugt als transparente Umgebungen ausgeführt, die insbesondere in HTML5 und CSS programmiert sind. Mit dem Begriff "Schaltfläche" sind hier und in den folgenden Ausführungsvarianten alle möglichen Elemente gemeint, mit denen eine gezielte Interaktion des Nutzers mit dem Datenverarbeitungssystem möglich ist. Schaltflächen können insbesondere als anwählbare markierte Flächen in der grafischen Benutzeroberfläche einer Software (insbesondere in einem Webbrowser) implementiert sein.

In einer weiteren bevorzugten Ausführungsform ist mindestens eine Aktivierungsebene durch den Benutzer einblendbar und ausblendbar.

Wird eine Aktivierungsebene eingeblendet oder ausgeblendet, so wird der entsprechende Aktivierungsbereich bevorzugt angezeigt beziehungsweise nicht (mehr) angezeigt und/oder die Aktivierbarkeit des entsprechenden Aktivierungsbereichs wird aktiviert beziehungsweise deaktiviert. Insbesondere ist es auch bevorzugt, dass die Aktivierbarkeit der Aktivierungsbereiche unabhängig von der Darstellung aktivierbar und deaktivierbar ist. Auch ist es bevorzugt, dass nur die Darstellung der Aktivierungsbereiche ausgeblendet werden kann, während die Aktivierbarkeit bestehen bleibt.

Ist ein bestimmter Aktivierungsbereich für einen Benutzer nicht interessant, kann er die entsprechende Aktivierungsebene ausblenden. Damit wird das Video nicht von dem entsprechenden (uninteressanten) Aktivierungsbereich verdeckt. Auch kann bei einer Vielzahl von verfügbaren Aktivierungsbereichen die Übersichtlichkeit verbessert werden, wenn einzelne Aktivierungsebenen ausgeblendet werden. Damit kann der Benutzer noch effizienter für ihn interessante Inhalte abrufen. Weiterhin ist es bevorzugt, dass die Aktivierungsebenen gruppiert eingeblendet und ausgeblendet werden können. Ist der Benutzer nur an Inhalten über eine bestimmte Gruppe von sichtbaren Objekten interessiert, kann so die Übersichtlichkeit verbessert werden. Ist der Benutzer nur an der Wiedergabe des Videos interessiert, kann er alle Aktivierungsebenen ausblenden.

Bevorzugt erfolgt das Einblenden und Ausblenden der Aktivierungsebenen über entsprechende Schaltflächen des Datenverarbeitungssystems, die beispielsweise von der Wiedergabesoftware beziehungsweise dem Wiedergabe-Plugin des Browsers bereitgestellt werden. Durch Betätigen dieser Schaltflächen kann eine Aktivierungsebene bevorzugt zu einem beliebigen Zeitpunkt eingeblendet beziehungsweise ausgeblendet werden.

Die Verwendung eines Browsers bietet sich insbesondere an, weil bei dem beschriebenen Verfahren der erste Datenstrom und der mindestens eine zweite Datenstrom voneinander getrennt sind. Das Konzept voneinander getrennter Datenströme lässt sich durch die Verwendung eines Browsers besonders gut realisieren. Insbesondere können die beiden Datenströme als (voneinander getrennte) Antworten auf voneinander getrennte http-Anfragen des Browser an einen Server bereitgestellt werden.

Mittels einer http-Anfrage (die auch als ein http-request bezeichnet werden kann) können unter einer bestimmten Adresse (uniform resource locator, URL) verfügbare Inhalte von einem Server über das http-Protokoll (hypertext transfer protocol) abgerufen und in das Datenverarbeitungssystem geladen werden. Besonders bevorzugt erfolgen mindestens drei http-Anfragen, um das beschriebene Verfahren zu starten. Zunächst wird mit einer ersten http-Anfrage (auch Haupt-http-Anfrage) ein HTML-Dokument geladen, welches den Videoplayer und die mindestens eine Aktivierungsebene bereitstellt und darüber hinaus gegebenenfalls auch Programmcode von funktionalen Komponenten enthält. Solche funktionalen Komponenten sind insbesondere die Wiedergabekomponente, Bereitstellungskomponenten, Überwachungskomponenten etc. Der Programmcode solcher funktionalen Komponenten kann in verschiedenen Programmiersprachen implementiert sein, beispielsweise in Javascript und/oder jQuery. Das Html-Dokument und der beschriebene Programmcode können auch auf mehrere Dateien unterteilt und dementsprechend mit mehreren http-Anfragen geladen werden. Insbesondere kann der beschriebene Programmcode teilweise in Bibliotheken ausgelagert sein, die nachgeladen werden. Die Gesamtheit aller Dateien bzw. Komponenten, die als Antwort auf die erste http-Anfrage übermittelt wird (ohne erste und zweite Datenströme) wird hier aber der Einfachheit halber als "HTML-Dokument" bezeichnet. Die Übermittlung des HTML-Dokuments wird hier als "html-Antwort" bezeichnet. Das HTML-Dokument stellt auch die Adressen für zwei weitere http-Anfragen bereit, nämlich wir eine zweite http-Anfrage für den ersten Datenstrom und eine dritte http-Anfrage für den zweiten Datenstrom.

Der erste Datenstrom wird nach dem Abruf über eine URL und bevorzugt lokal auf dem Datenverarbeitungssystem gepuffert (d.h. jedenfalls teilweise zwischengespeichert und zur Wiedergabe bereitgehalten). Der zweite Datenstrom kann bereits parallel zum Abruf des ersten Datenstroms ebenfalls über eine URL abgerufen werden. In bevorzugten Ausführungsvarianten wird der zweite Datenstrom auch erst durch Starten der Wiedergabe des Videos aus dem ersten Datenstrom gestartet, wobei die Wiedergabe des Videos aus dem ersten Datenstrom dann noch so lange verzögert wird bis die zur Bereitstellung der Aktivierungsbereiche notwendigen Daten aus dem zweiten Datenstrom verfügbar sind. Durch beide Vorgehensweisen wird der mindestens eine Aktivierungsbereich (zweiter Datenstrom) mit dem Video (erster Datenstrom) synchronisiert bereitgestellt.

Wenn das Verfahren auf Ausführungsvarianten mit mehreren Aktivierungsbereichen und/oder mehrere Aktivierungsebenen angewendet wird, dann werden diese mehreren Aktivierungsbereiche (ob in einer oder mehreren Aktivierungsebenen) bevorzugt mit einem (gemeinsamen) zweiten Datenstrom bereitgestellt. Ein solcher (gemeinsamer) zweiter Datenstrom ist mit einer (gemeinsamen) dritten http-Anfrage abrufbar und wird mit einer solchen (gemeinsamen) dritten http-Anfrage abgerufen. Alternativ können auch für verschiedene Aktivierungsbereiche voneinander getrennte zweite Datenströme existieren, die mit voneinander getrennten dritten http-Anfragen abrufbar sind und abgerufen werden.

In einer bevorzugten Ausführungsform umfasst das Verfahren weiterhin den folgenden Schritt:
c) Erkennen einer Interaktion des Benutzers mit dem Datenverarbeitungssystem durch Aktivieren des mindestens einen Aktivierungsbereichs und Starten einer Interaktionsaktion, wenn eine Interaktion erkannt wurde.

Der Schritt c) wird bevorzugt während der (zeitgleichen) Durchführung von Schritt a) und b) durchgeführt. Bevorzugt sind auf dem Datenverarbeitungssystem (insbesondere in dem Webbrowser) permanent Überwachungsmittel zum Erfassen von Nutzerinteraktionen im Sinne von Schritt c) aktiv. Wenn in Schritt c) eine Benutzerinteraktion erkannt wurde, können die Schritte a) und b) gegebenenfalls unterbrochen oder beendet werden.

Dabei ist unter Aktivieren eines Aktivierungsbereichs insbesondere zu verstehen, dass der Benutzer den Aktivierungsbereich beispielsweise mittels einer Computermaus oder mittels eines Touchscreens anklickt.

Besonders bevorzugt ist das beschriebene Verfahren, wenn eine der folgenden Aktionen durchgeführt wird, wenn eine Interaktion des Benutzers durch Aktivieren des mindestens einen Aktivierungsbereichs erkannt wurde:
- Unterbrechen der Wiedergabe des Videos gemäß Schritt a),
- Verlangsamen der Wiedergabe des Videos gemäß Schritt a),
- Gezieltes Zurückspringen im zeitlichen Verlauf des Videos,
- Öffnen eines neuen Fensters eines Webbrowsers,
- Absenden einer http-Anfrage,
- Einblenden oder Ausblenden mindestens einer Aktivierungsebene , und
- Aktivieren einer Browser-Funktion,
- Beliebige weitere Aktion.

Durch Aktivieren des mindestens einen Aktivierungsbereichs können eine oder mehrere der angegebenen Aktionen zeitgleich oder zu festgelegten unterschiedlichen Zeiten ausgelöst werden. Es ist darauf hinzuweisen, dass die Liste der Aktionen nicht abschließend ist. Unter dem letzten Punkt "beliebige weitere Aktion" können alle denkbaren weiteren möglichen Aktionen fallen, die in der jeweiligen Umgebung der Implementierung des beschriebenen Verfahrens technisch möglich sind.

Besonders bevorzugt ist, dass die Wiedergabe des Videos unterbrochen oder zumindest verlangsamt wird, bevor eine andere Aktion durchgeführt wird. Damit kann der Benutzer nach Erhalt der gewünschten Inhalte das Video an der entsprechenden Stelle fortsetzen. Eine Unterbrechung bzw. eine Verlangsamung der Wiedergabe des Videos erfordert üblicherweise auch eine synchronisierte Unterbrechung bzw. Verlangsamung der Bereitstellung des mindestens einen Aktivierungsbereichs. Eine solche Synchronisation ist auch erforderlich, wenn das weiter oben erwähnte gezielte Zurückspringen im zeitlichen Verlauf des Videos erfolgt.

Das Öffnen eines neuen Fensters eines Webbrowsers dient insbesondere zur Bereitstellung von weiteren Inhalten. Dabei ist der Begriff des Fensters weit auszulegen. Bei einem Fenster kann es sich insbesondere um eine Instanz des Webbrowsers, einen Tab des Webbrowsers oder ein Pop-up handeln. Hier auch umfasst ist das Öffnen eines (virtuellen) Fensters innerhalb eines Fensters eines Webbrowsers, in welchem auch das beschriebene Verfahren abläuft. Ein solches virtuelles Fenster kann beispielsweise mit einem in einer überlagernden Sichtbarkeitsebene angezeigt werden und mittels AJAX mit Daten bzw. Inhalten gefüllt werden, die von einem Server abgerufen werden.

Auch können weitere Inhalte mit einer (weiteren) Datei bereitgestellt werden. Die Datei kann insbesondere von einem lokalen Speicher des Datenverarbeitungssystems, über ein lokales Netzwerk und/oder über das Internet (insbesondere mittels einer http-Anfrage) bereitgestellt werden. Beispielsweise kann die abgerufene Datei ein weiteres Video, ein Bild, eine Infografik, eine Tonaufhahme oder einen Text umfassen. Das Bereitstellen der Datei erfolgt bevorzugt in einem neuen Fenster des Browsers, wobei hier die zuvor erläuterte weite Auslegung des Begriffs Fenster wichtig ist, die auch virtuelle Fenster innerhalb des Fensters eines Webbrowsers umfasst. Insbesondere ist es möglich, dass durch Aktivieren eines Aktivierungsbereichs ein neues Fenster des Browsers geöffnet wird, in dem wiederum ein Video geladen wird, welches ebenfalls Aktivierungsbereiche aufweist, die nach dem beschriebenen Verfahren bereitgestellt wreden. Auch eine große Zahl von Videos kann so miteinander verknüpft werden.

Eine weitere Möglichkeit ist die Aktivierung mindestens einer weiteren Aktivierungsebene, so dass diese Aktivierungsebene im Sinne des hier beschriebenen Verfahrens aktivierbar ist.

Als weitere Aspekte der Erfindung werden hier ein Datenverarbeitungssystem und ein Computerprogramm vorgestellt, die zur Durchführung des beschriebenen Verfahrens eingerichtet sind. Außerdem wird ein Datenträger vorgestellt, auf dem das Computerprogramm installiert ist.

Die weiter vorne für das Verfahren zum Interagieren des Benutzers mit dem Datenverarbeitungssystem beschriebenen besonderen Vorteile und Ausgestaltungsmerkmale sind auf das beschriebene Computerprogramm und auf den beschriebenen Datenträger anwendbar und übertragbar.

Als ein weiterer Aspekt der Erfindung wird ein Verfahren zum Erstellen eines zweiten Datenstroms für das zuvor beschriebene Verfahren zum Interagieren des Benutzers mit dem Datenverarbeitungssystem vorgestellt, das zumindest die folgenden Schritte umfasst:
A) Bereitstellen eines wiederzugebenden Videos (1),
B) Definieren mindestens eines charakteristischen Punkts in dem Video,
C) für eine Vielzahl von Zeitpunkten des Videos automatisiertes oder zumindest teilautomatisiertes Zuordnen von jeweiligen Koordinatenangaben in einem das Video überlagernden Koordinatensystem zu dem mindestens einen charakteristischen Punkt,
D) Definieren eines Aktivierungsbereichs, der zumindest teilweise mit Vorgängen in dem Video zeitlich synchronisiert ist, wobei die in Schritt C) für die Vielzahl der Zeitpunkte des Videos erhaltenen Koordinatenangaben verwendet werden, und
E) Erstellen des zweiten Datenstroms umfassend den in Schritt D) definierten Aktivierungsbereich, der mit dem Video synchronisierbar ist.

Hier auch beschrieben werden soll ein Computerprogramm eingerichtet zur Durchführung des Verfahrens zum Erstellen eines zweiten Datenstroms sowie ein zur Durchführung dieses Verfahrens zum Erstellen eines zweiten Datenstroms eingerichtetes Datenverarbeitungssystem und ein Datenträger, auf dem ein solches Computerprogramm installiert ist

Die weiter vorne für das Verfahren zum Bereitstellen einer Interaktionsmöglichkeit für einen Benutzers beschriebenen besonderen Vorteile und Ausgestaltungsmerkmale sind auf das beschriebene Verfahren zum Erstellen des zweiten Datenstroms anwendbar und übertragbar.

In Schritt A) wird das Video bereitgestellt, das gemäß Schritt a) des Verfahrens zum Interagieren des Benutzers mit dem Datenverarbeitungssystem wiedergegeben werden soll.

In Schritt B) wird der mindestens eine charakteristische Punkt in dem Video definiert. Der charakteristische Punkt in dem Video ist bevorzugt zugleich ein charakteristischer Punkt eines Objektes, welches in dem Video dargestellt wird. Die Definition des charakteristischen Punktes umfasst bevorzugt die Erkennung einer Merkmalsgruppe in dem Video (insbesondere einer Gruppe von Pixeln, Flächen oder Kanten in der Umgebung des charakteristischen Punktes in einem einzelnen Bild bzw. Frame des Videos), welche mit gängigen Methoden der Bildauswertung von Bild zu Bild bzw. von Frame zu Frame nachverfolgt werden kann.

Für das Zuordnen von Koordinatenangaben zu einem charakteristischen Punkt für eine Vielzahl von Zeitpunkten in Schritt C) wird bevorzugt automatisiert erfasst, zu welchem Zeitpunkt sich der mindestens eine charakteristische Punkt an welcher Position befindet. Die Position ist dabei über Koordinatenangaben definiert. Damit kann eine zeitliche Veränderung einer Position und (im Falle einer Mehrzahl von charakteristischen Punkten) auch eine Form eines Objekts erfasst werden.

Schritt C) erfolgt bevorzugt automatisiert oder teilautomatisiert. Dazu kann insbesondere automatisiert die Position jedes charakteristischen Punkts (die durch die Koordinatenangabe ausgedrückt werden kann) für eine Vielzahl von Zeitpunkten des Videos erfasst werden. Das kann beispielsweise mit den im Zusammenhang mit Schritt B) bereits erwähnten gängigen Methoden der Bildauswertung erfolgen. Diese Methoden umfassen insbesondere photometrische und/oder dreidimensionale rotoskopische Analysen. Diese Methoden umfassen insbesondere auch Methoden zur Bewegungserkennung (oder auch "Motion-Tracking"). Insbesondere wenn die Definition eines charakteristischen Punktes Merkmalsgruppen bzw. eine Gruppe von Pixeln, Flächen oder Kanten in der Umgebung des charakteristischen Punktes umfasst, dann ist es möglich mit derartigen Methoden eine Bewegung der Pixel, Flächen oder Kanten zu erkennen und daraus auf eine Verschiebung des charakteristischen Punktes zu schließen. Gängige Methoden der Bewegungserkennung erfordern allerdings häufig, dass ein charakteristischer Punkt ausgehend von dem Bild/Frame auf dem dieser Punkt erstmalig definiert ist, zunächst in den zeitlich angrenzenden Bildern/Frames (vor und nach dem Bild/Frame in dem der Punkt markiert wurde) erkannt wird und dann Schritt für Schritt das Video analysiert wird, um den charakteristischen Punkt in allen Bildern/Frames zu erkennen, in denen dieser Punkt sichtbar ist. Dies geschieht bevorzugt zeitlich vom Anfang bis zum Ende des Videos. In weiteren bevorzugten Ausführungsvarianten geschieht dies vom ersten Auftreten bis zum letzten Auftreten des Punktes in dem Video. Im Rahmen der Bewegungserkennung kann ein Video sowohl vorwärts als auch rückwärts analysiert werden. Ein charakteristischer Punkt wird zunächst in einem bestimmten Bild/Frame des Videos erfasst und dann ausgehend von diesem Bild/Frame in vorausgehenden Bildern/Frames sowie in nachfolgenden Bildern/Frames identifiziert.

Eine solche Bewegungserkennung kann als automatisierte Zuordnung von Koordinatenangaben zu charakteristischen Punkten eines Videos bezeichnet werden. In einer teilautomatisierten Zuordnung wird die automatisierte Zuordnung bevorzugt noch durch eine (bedarfsweise) manuelle Nachbearbeitung ergänzt. Beispielsweise kann ein Anwender, der das Verfahren zur Erstellung eines zweiten Datenstroms durchführt, mittels Bewegungserkennung ermittelte Koordinatenangaben für zuvor manuell ausgewählte charakteristische Punkte präsentiert bekommen und dann manuell Nachkorrekturen in einzelnen Bildern/Frames des Videos durchführen, insbesondere indem automatisch ermittelte Koordinatenangaben manuell korrigiert werden. Bevorzugt werden dann anhand der korrigierten Koordinatenangaben Merkmalsgruppen (Pixel, Flächen oder Kanten) neu erkannt und dem charakteristischen Punkt erneut zugeordnet. So kann anschließend die Ermittlung von Koordinatenangaben für den charakteristischen Punkt anhand der neu erkannten Merkmalsgruppen durchgeführt werden.

Sind einem in dem Video dargestellten Objekt mehrere charakteristische Punkte zugeordnet, können diese charakteristischen Punkte gruppiert werden und gemeinsam erfasst werden und zur Ermittlung von Koordinatenangaben verfolgt werden. Die Erfassung der charakteristischen Punkte und die Zuordnung von Koordinatenangaben kann insbesondere auch mit einem hierfür eingerichteten Datenverarbeitungssystem durchgeführt werden, welches sich von dem Datenverarbeitungssystem für das Verfahren zur Bereitstellung einer Interaktionsmöglichkeit unterscheidet. Dieses Datenverarbeitungssystem kann beispielsweise mit spezieller, für die Bildauswertung bzw. Bewegungserkennung geeigneter Software ausgestattet sein. Aus dieser Software werden bevorzugt die Koordinatenangaben exportiert und anschließend für die weiteren Verfahrensschritt D) und E) bereitgestellt. Das kann insbesondere über eine Schnittstelle dieser Software und bevorzugt mit einem dafür eingerichteten Skript durchgeführt werden. Besonders bevorzugt ist eine geeignete Software zur Bildauswertung bzw. zur Bewegungserkennung in ein Computerprogramm zur Durchführung des Verfahrens zur Erstellung eines zweiten Datenstroms eingebettet.

Schritt C) kann insbesondere ein sogenanntes 1-Punkt-Tracking umfassen, bei dem ein einzelner charakteristischer Punkt definiert und erfasst wird. Alternativ kann auch ein Mehrpunkt-Tracking mit einer entsprechenden Mehrzahl an charakteristischen Punkten erfolgen. Bei einem Mehrpunkt-Tracking werden Informationen zur Veränderung der Koordinatenangaben mehrerer Punkte miteinander kombiniert, um so insgesamt eine genauere Verfolgung der Punkte zu ermöglichen. Mit einem 4-Punkt-Tracking können beispielsweise in einem Video dargestellte Bildschirme erfasst werden, indem die vier Ecken eines Bildschirms jeweils einem Punkt zugeordnet sind. Da ein Bildschirm ein starres Objekt ist, kann eine Verformung des Bildschirms ausgeschlossen werden. Es ist nur eine Drehung oder eine Verschiebung des Bildschirms möglich. Bewegungen der vier Punkte können unter dieser Prämisse ausgewertet werden und. Damit kann die Anzeige eines derart erfassten Bildschirms mit dem beschriebenen Verfahren durch einen Aktivierungsbereich überlagert werden. Weiterhin kann in Schritt C) das sogenannte Kamera-Tracking eingesetzt werden. Dabei wird in einem Video eine Mehrzahl von Punkten eines Hintergrunds definiert und deren Position für eine Vielzahl von Zeitpunkten (insbesondere automatisiert) erfasst. Unter der Annahme, dass die so definierten Punkte ortsfest sind, kann eine Bewegung einer Kamera (einschließlich einer Veränderung eines Zooms, einer Veränderung einer Perspektive, einer Verschiebung und einer Verkippung) bestimmt werden. Die so gewonnene Information kann beim Definieren der Aktivierungsbereiche in Schritt D) berücksichtigt werden.

Bei der Zuordnung der Koordinatenangaben zu einem charakteristischen Punkt gemäß Schritt C) kann auch interpoliert werden. Eine derartige Interpolation ist von der zuvor für das Verfahren zum Interagieren eines Benutzers mit einem Datenverarbeitungssystem beschriebenen Interpolation zu unterschieden. In Schritt C) ist unter Interpolation zu verstehen, dass ein charakteristischer Punkt nicht für jeden Zeitpunkt des Videos tatsächlich erfasst wird, sondern nur für einige zeitlich voneinander beabstandete Zeitpunkte. Wird eine Koordinatenangabe für einen charakteristischen Punkt beispielsweise nur für eine ersten und einen dritten Zeitpunkt tatsächlich ermittelt, so wird einem zwischen dem ersten und dem dritten Zeitpunkt liegenden zweiten Zeitpunkt bevorzugt ein Mittelwert dieser Koordinatenangabe zugeordnet.

In Schritt D) wird bevorzugt mit den in Schritt C) erhaltenen Koordinatenangaben der mindestens eine Aktivierungsbereich definiert. Dazu wird bevorzugt festgelegt, an welcher Stelle einer Aktivierungsebene (insbesondere umfassend welche Pixel des Videos) ein Aktivierungsbereich mit welcher Form zu welchem Zeitpunkt definiert sein soll. Dabei umfasst das Definieren des mindestens einen Aktivierungsbereichs insbesondere eine Information zur Form (und ggf. auch zur optischen Gestaltung) des Aktivierungsbereichs sowie zur Funktionalität des Aktivierungsbereichs für jeden Zeitpunkt des Videos. (d.h. dazu, welche Aktion beim Aktivieren ausgelöst werden soll). Auch die Reihenfolge mehrerer Aktivierungsebenen kann in Schritt D) festgelegt werden. Die in Schritt D) erstellten Definitionen des Aktivierungsbereichs können auch Programmcode beinhalten, welcher angibt, wie sich der Aktivierungsbereich in Abhängigkeit vom zeitlichen Verlauf sowie in Abhängigkeit von den in Schritt C) erhaltenen Koordinatenangaben ändert. Solcher Programmcode kann beispielsweise in Javascript implementiert sein. Dann ist solcher Programmcode für einen Browser ausführbar.

In Schritt E) wird aus dem so definierten mindestens einen Aktivierungsbereich ein jeweiliger zweiter Datenstrom erstellt. Das bedeutet, dass die für den jeweiligen Aktivierungsbereich festgelegten und erhaltenen Informationen in einer Datei gespeichert werden, die zur Verwendung im beschriebenen Verfahren geeignet ist, die also in Form eines Datenstroms bereit gestellt werden kann

Die Erfindung und das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die in den Figuren dargestellten Größenverhältnisse nur schematisch sind. Es zeigen:
- Fig. 1:: eine schematische Darstellung einer Videodarstellungsebene mit zwei überlagernden Aktivierungsebenen,
- Fig. 2:: eine schematische Darstellung einer Aktivierungsebene mit einem Koordinatensystem,
- Fig. 3a bis 3f:: schematische Darstellungen einer Videodarstellungsebene und einer Aktivierungsebene zu drei verschiedenen Zeitpunkten eines zeitlichen Verlaufs,
- Fig. 4:: ein Beispiel der Anwendung des beschriebenen Verfahrens auf ein Video mit einem driftenden Kraftfahrzeug,
- Fig. 5 bis Fig. 8:: verschiedene Ausführungsvarianten von Datenverarbeitungssystemen für das beschriebene Verfahren,
- Fig. 9:: ein schematisches Ablaufdiagramms des beschriebenen Verfahrens in einer Client-Server - Konfiguration, und
- Fig. 10:: ein schematisches Ablaufdiagramms des beschriebenen Verfahrens zur Erstellung eines zweiten Datenstroms.

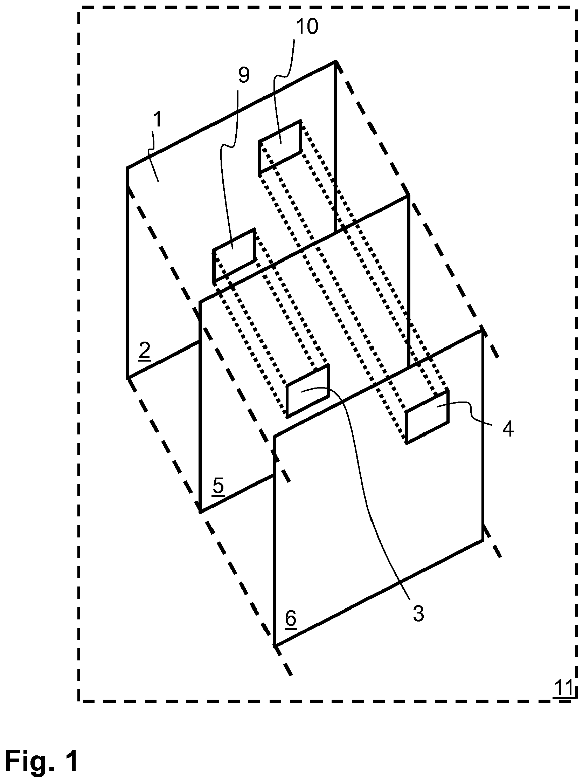

Fig. 1 veranschaulicht ein Ebenenmodell, wie es beispielsweise in einem Browser 11 implementiert sein kann, der zum Darstellen von HTML-Dokumenten verwendet wird. Der Browser 11 ist auf einem Datenverarbeitungssystem 23 installiert. Die hinterste Ebene (bzw. die ganz unten oder zu unterst angeordnete Ebene) ist eine Videodarstellungsebene 2, in der ein Video 1 wiedergegeben wird. In dem Video 1 sind ein erstes Objekt 9 und ein zweites Objekt 10 (bildlich) dargestellt. In der Darstellung in Fig. 1 gezeigt ist ein Einzelbild bzw. ein Frame, welches/welcher einem Zeitpunkt des Videos entspricht. Weiterhin in Fig. 1 gezeigt sind eine erste Aktivierungsebene 5 und eine zweite Aktivierungsebene 6, die beide die Videodarstellungsebene 2 vollständig überlagern, wie durch gestrichelte Linien angedeutet ist und von der Videodarstellungsebene 2 getrennt sind. Die Darstellung ist insbesondere insoweit schematisch, dass die Videodarstellungsebene 2, die erste Aktivierungsebene 5 und die zweite Aktivierungsebene 6 einzeln und versetzt dargestellt sind.

Die zweite Aktivierungsebene 6 ist oberhalb der ersten Aktivierungsebene 5 angeordnet. Die erste Aktivierungsebene 5 umfasst einen ersten Aktivierungsbereich 3, der dem ersten Objekt 9 in dem Video 1 zugeordnet ist. Das bedeutet, dass der erste Aktivierungsbereich 3 die Form des ersten Objekts 9 aufweist und derart in der ersten Aktivierungsebene 5 angeordnet ist, dass der erste Aktivierungsbereich 3 das erste Objekt 9 vollständig überlagert. In gleicher Weise ist dem zweiten Objekt 10 in dem Video 1 ein zweiter Aktivierungsbereich 4 in der zweiten Aktivierungsebene 6 zugeordnet.

Durch Aktivieren eines der Aktivierungsbereiche 3, 4 kann ein Benutzer mit dem Datenverarbeitungssystem 23 interagieren. Dabei entsteht für den Benutzer der Eindruck er würde unmittelbar auf in dem Video 1 dargestellte Objekte 9, 10 klicken. Klickt der Benutzer beispielsweise mit einer Computermaus auf den ersten Aktivierungsbereich 3, so wird beispielsweise die Wiedergabe des Videos 1 unterbrochen und ein neues Fenster des Browsers 11 geöffnet, in welchem weitere Inhalte angezeigt werden. So kann der Benutzer Inhalte zu dem ersten Objekt 9 abrufen.

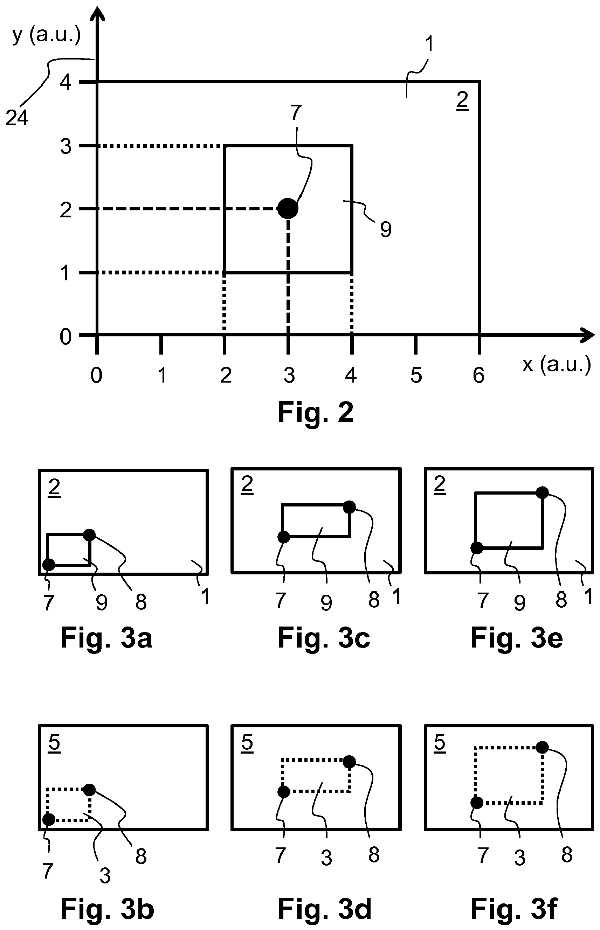

Fig. 2 zeigt eine zweidimensionale schematische Darstellung einer Videodarstellungsebene 2. In einem darin wiedergegebenen Video 1 ist ein erstes Objekt 9 dargestellt. Das erste Objekt 9 ist in diesem Beispiel ein Rechteck. Die Videodarstellungsebene 2 weist eine x-Achse und eine y-Achse auf, die zusammen ein das Video überlagerndes Koordinatensystem 24 bilden. An der x-Achse und an der y-Achse sind beispielhafte Zahlen in beliebigen Einheiten angegeben. Die Abkürzung "a.u." bedeutet dabei arbitrary units (beliebige Einheiten). Gezeigt ist ein Einzelbild eines Zeitpunkts des Videos 1. Üblicherweise wird als Einheit zur Orientierung in einem das Video überlagernden Koordinatensystem 24 ein Pixelraster angegeben, welches der Pixelauflösung des Videos entspricht (beispielsweise 1920 * 1080 Bildpunkte für ein Full-HD Video).

In dem Video 1 ist ein erster charakteristischer Punkt 7 definiert. Der erste charakteristische Punkt 7 ist in diesem Beispiel ein schwarzer Punkt in der Mitte des ersten Objekts 9. Dieser schwarze Punkt ist im Video 1 tatsächlich zu sehen. Durch eine Koordinatenangabe in dem Koordinatensystem 24 umfassend eine x-Koordinate und eine y-Koordinate kann der erste charakteristische Punkt 7 gekennzeichnet werden. In diesem Beispiel hat der erste charakteristische Punkt 7 die x-Koordinate 3 und die y-Koordinate 2.

Die Fig. 3a bis 3f zeigen schematische Darstellungen einer Videodarstellungsebene 2 und einer ersten Aktivierungsebene 5 zu drei verschiedenen Zeitpunkten eines zeitlichen Verlaufs. Fig. 3a zeigt die Videodarstellungsebene 2 zu einem ersten Zeitpunkt. Fig. 3b zeigt die erste Aktivierungsebene 5 zu dem ersten Zeitpunkt. Fig. 3c zeigt die Videodarstellungsebene 2 zu einem zweiten Zeitpunkt. Fig. 3d zeigt die erste Aktivierungsebene 5 zu dem zweiten Zeitpunkt. Fig. 3e zeigt die Videodarstellungsebene 2 zu einem dritten Zeitpunkt. Fig. 3f zeigt die erste Aktivierungsebene 5 zu dem dritten Zeitpunkt. Der erste, zweite und dritte Zeitpunkt bilden einen zeitlichen Verlauf.

In der Videodarstellungsebene 2 wird ein Video 1 wiedergegeben, in dem ein rechteckiges erstes Objekt 9 mit zwei schwarzen Punkten dargestellt ist. Die schwarzen Punkte sind als ein erster charakteristischer Punkt 7 und ein zweiter charakteristischer Punkt 8 definiert. In der ersten Aktivierungsebene 5 ist ein erster Aktivierungsbereich 3 zu erkennen. Der erste Aktivierungsbereich 3 ist in diesem Beispiel für den Benutzer nicht sichtbar, was durch gestrichelte Linien angedeutet ist. Das bedeutet, dass der erste Aktivierungsbereich 3 für den Benutzer lediglich aktivierbar ist. Durch das im Video 1 dargestellte erste Objekt 9 weiß der Benutzer, an welche Stelle er beispielswiese mit einer Computermaus klicken muss, um weitere Inhalte zu dem ersten Objekt 9 zu erhalten. Auch die charakteristischen Punkte 7, 8 sind in den Darstellungen der ersten Aktivierungsebene 5 in Fig. 3b, Fig. 3d und Fig. 3f eingezeichnet, was hier aber nur der Erklärung dient. Die charakteristischen Punkte 7, 8 sind in der ersten Aktivierungsebene 5 nicht sichtbar.

Das erste Objekt 9 bewegt sich vom ersten Zeitpunkt zum zweiten Zeitpunkt und verändert dabei seine Form. Vom zweiten Zeitpunkt zum dritten Zeitpunkt verändert das erste Objekt 9 nur seine Form und bewegt sich dabei nicht. Für den ersten Aktivierungsbereich 3 ist eine Veränderung vorgegeben, die (insbesondere nach Art und Zeitpunkt) mit in dem Video 1 dargestellten Vorgängen synchronisiert ist. Hier handelt es sich bei den in dem Video 1 dargestellten Vorgängen um die Verschiebung des ersten Objekts 9 und um die Veränderung der Form des ersten Objekts 9. Die Veränderung des ersten Aktivierungsbereichs 3 ist in diesem Beispiel derart vorgegeben, dass der erste Aktivierungsbereich 3 nach Position und Form der Veränderung des ersten Objekts 9 folgt.

Die Synchronisation zwischen der Veränderung des ersten Objekts 9 und dem ersten Aktivierungsbereich 3 erfolgt unter Verwendung von Koordinatenangaben der charakteristischen Punkte 7, 8.

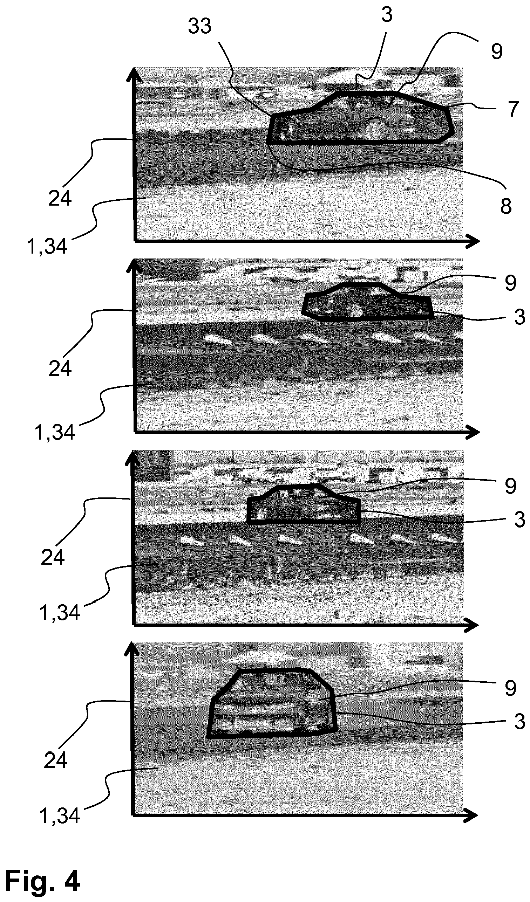

Die anhand von Fig. 3a bis Fig. 3f prinzipiell erläuterte Vorgehensweise wird in Fig. 4 anhand von vier Bildern/Frames aus einem Video mit einem driftenden Kraftfahrzeug noch etwas eingehender erläutert. Zu erkennen sind jeweils vier verschiedene (zeitlich von oben nach unten aufeinander folgende) Bilder/Frames 34 eines Videos 1, die jeweils vom immer gleichen Koordinatensystem 24 überlagert sind. Die hier gezeigten Bilder/Frames 34, des Videos 1 folgen zeitlich nicht unmittelbar aufeinander und wurden hier nur beispielhaft ausgewählt. In allen Bildern 34 mit Bezugszeichen bezeichnet ist das Objekt 9, welches hier ein driftendes Kraftfahrzeug ist und welches mit dem beschriebenen Verfahren für einen Benutzer aktivierbar gemacht werden soll. Dazu ist in einer (hier nicht gesonderten dargestellten) das Video 1 überlagernden Aktivierungsebene ein Aktivierungsbereich 3 angelegt, welcher synchronisiert mit der Bewegung des Objektes 9 von Bild 34 zu Bild 34 des Videos 1 verändert wird, um immer überlappend mit dem Objekt 9 für den Benutzer aktivierbar zu sein. Der Aktivierungsbereich 3 hat eine sich von Bild zu Bild verändernde Form und Position, welche an die sichtbare Silhouette und deren Position des Objekts 9 im Video 1 angepasst ist. Der Aktivierungsbereich 3 ist mit Hilfe von Punkten 7, 8, 33 definiert. Diese Punkte 7, 8, 11 werden zur Anpassung des Aktivierungsbereichs 3 von Bild 34 zu Bild 34 in einem zweiten Datenstrom übertragen.

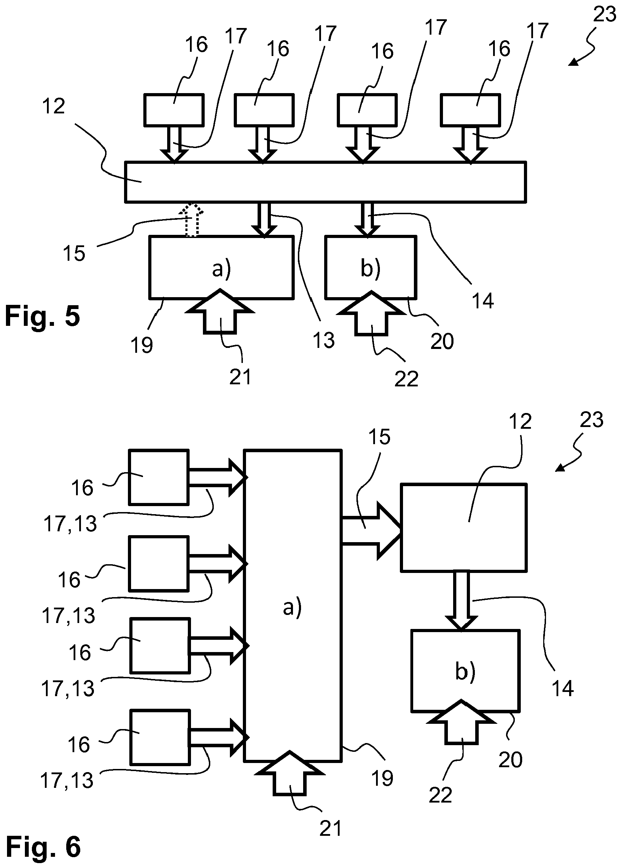

Die Fig. 5 bis 8 zeigen verschiedene Ausführungsvarianten von Datenverarbeitungssystemen 23 zur Durchführung des beschriebenen Verfahrens. Die in den Figuren 5 bis 8 dargestellten Komponenten eines Datenverarbeitungssystems 23 sind bevorzugt zumindest teilweise als Computerprogrammbestandteile bzw. Softwarekomponenten realisiert.

Alle Ausführungsvarianten haben gemein, dass die Wiedergabekomponente 19 zur Wiedergabe des als erster Datenstrom 21 bereitgestellten Videos und die Bereitstellungskomponente 20 zur Bereitstellung des als zweiter Datenstrom 22 bereitgestellten mindestens einen Aktivierungsbereichs umfasst. Die Wiedergabekomponente 19 umfasst bevorzugt auch die zuvor bereits beschriebene Videodarstellungsebene. Die Bereitstellungskomponente 20 umfasst bevorzugt auch die bereits zuvor beschriebene mindestens eine Aktivierungsebene.

Darüber hinaus existieren gemäß allen Ausführungsvarianten Kontrollkomponenten 16 welche für einen Benutzer bedienbar sind und welche Kontrollsignale 17 aussenden können, um die Wiedergabe des Videos zu steuern. Dies umfasst beispielsweise das Stoppen oder Pausieren sowie das Vor- und Zurückspulen in dem Video. Diese Kontrollkomponenten 16 wären beispielsweise vergleichbar mit den Tasten eines Videorekorders, wenn die Wiedergabekomponente 19 ein Videorekorder wäre oder die softwarebasierten Schaltflächen unterhalb eines Videos bei einem softwarebasierten Videoplayer, wenn die Wiedergabekomponente 19 ein solcher softwarebasierter Videoplayer wäre. Kontrollkomponenten 16, die Kontrollsignale 17 zur Kontrolle des Videos aussenden können, können aber beliebige andere Kontrollkomponenten sein, die im Rahmen des beschriebenen Verfahrens eingesetzt werden können.

Um nun die Synchronisation zwischen der Wiedergabe des Videos mit der Wiedergabekomponente 19 und der Bereitstellung des mindestens einen Aktivierungsbereichs mit der Bereitstellungskomponente 20 zu erreichen, ist es regelmäßig erforderlich eine derartige mit Kontrollkomponenten 16 ausgeübte Kontrolle über die Wiedergabekomponente 19 zu erfassen und die Bereitstellungskomponente 20 hiermit entsprechend zu synchronisieren.

Gemäß der Ausführungsvariante nach Fig. 5 geschieht dies dadurch, dass zwischen der Wiedergabekomponente 19 und den Kontrollkomponenten 16 eine Steuerungskomponente 12 angeordnet ist. Kontrollsignale 17 der Kontrollkomponenten 16 gelangen nicht direkt zu der Wiedergabekomponente 19, sondern werden zuvor von der Steuerungskomponente 12 in erste Steuerungssignale 13 zur Steuerung der Wiedergabekomponente 19 umgewandelt. Diese Umwandlung kann auch eine simple Durchleitung von Kontrollsignalen 17 als erste Steuerungssignale 13 umfassen. Die Steuerungskomponente 12 hat die Kontrollsignale 17 dann auch zur Verfügung, um synchron zur Steuerung der Wiedergabekomponente 19 mit ersten Steuerungssignalen 13 auch eine Steuerung der Bereitstellungskomponente 20 mit zweiten Steuerungssignalen 14 durchzuführen. Dabei können zweite Steuerungssignale 14 von der Steuerungskomponente 12 entsprechend zu ersten Steuerungssignalen 13 erzeugt werden. Optional ist in der Fig. 5 auch noch gezeigt, dass von der Wiedergabekomponente 19 ausgehend ein Überwachungssignal 15 an die Steuerungskomponente 12 übermittelt werden kann mit welchem die Wiedergabe des Videos mit der Wiedergabekomponente 19 überwacht werden kann. Dieses Überwachungssignal 15 kann gegebenenfalls für eine besonders feine Synchronisation zwischen der Wiedergabe des Videos und der Bereitstellung des mindestens einen Aktivierungsbereichs verwendet werden.

Gemäß der Ausführungsvariante nach Fig. 6 bilden die Kontrollsignale 17 unmittelbar erste Steuerungssignale 13 zur Steuerung der Wiedergabekomponente 19. Es existiert nur eine (separate) Steuerungskomponente 12 zur synchronen Steuerung der Bereitstellungskomponente 20, welche die Synchronisation der Bereitstellung des mindestens einen Aktivierungsbereichs nur anhand eines Überwachungssignals 15 durchführt, mit welchem die Wiedergabekomponente 19 bzw. die Wiedergabe des Videos mit der Wiedergabekomponente 19 überwacht wird.

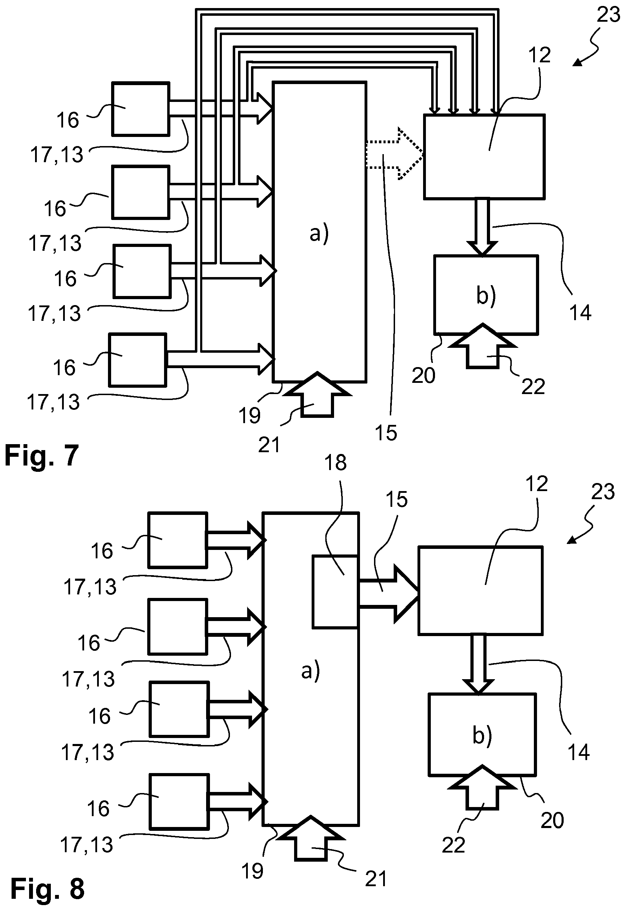

Die Ausführungsvariante gemäß Fig. 7 ist prinzipiell sehr ähnlich zu der Ausführungsvariante gemäß Fig. 5. Hier werden Kontrollsignale 17 bzw. erste Steuerungssignale 13 zur Steuerung der Wiedergabekomponente 19 abgefangen und einer Steuerungskomponente 12 übergeben, die dem Zweck dient die Bereitstellungskomponente 20 im Sinne des Ausführungsbeispiels gemäß Fig. 6 zu steuern.

Die Ausführungsvariante gemäß Fig. 8 ist prinzipiell sehr ähnlich zu der Ausführungsvariante gemäß Fig. 6. Allerdings existiert hier zusätzlich eine Überwachungskomponente 18 mit der das Video bzw. die Wiedergabekomponente 19 überwacht wird, um ein Überwachungssignal 15 zu erzeugen. Diese Ausführungsvariante kann beispielsweise dann zum Einsatz kommen, wenn die Wiedergabekomponente 19 selbst nicht direkt einem Überwachungssignal 15 entnommen werden kann, welches zur Synchronisation der Bereitstellungskomponente 20 mit der Wiedergabekomponente 19 verwendet werden kann. Die Überwachungskomponente 18 kann beispielsweise ein Modul zur Auswertung einer bestimmten Pixelgruppe des Videos umfassen, wobei die Überwachungskomponente 18 aus der Pixelgruppe bzw. aus Veränderungen der Pixelgruppe während des zeitlichen Ablauf des Videos dann ein Überwachungssignal 15 erzeugt, welches zur Synchronisation der Bereitstellungskomponente 20 verwendet werden kann, indem über dieses Überwachungssignal 15 bestimmte Datensätze in dem zweiten Datenstrom 15 angesprochen werden können.

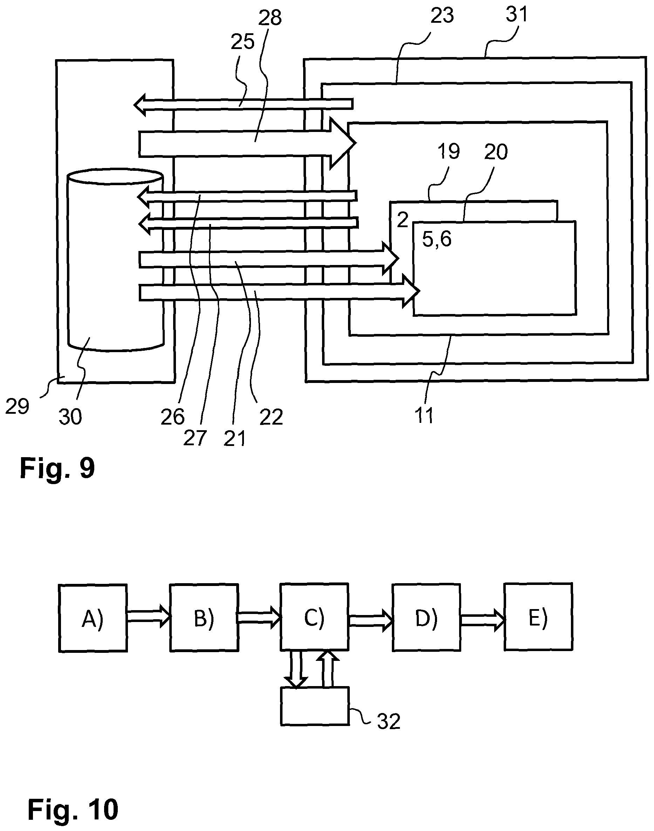

Fig. 9 erläutert einen Ablauf des beschriebenen Verfahrens in einer Client-Server Umgebung. Zu Erkennen ist der Client 31 auf dem das beschriebene Verfahren durchgeführt wird und ein Server 29 von dem Datenströme 21, 22 für das beschriebene Verfahren bereitgestellt werden. Der Client 31 umfasst ein Datenverarbeitungssystem 23 mit dem das beschriebene Verfahren durchgeführt wird, beispielsweise mit einem Webbrowser 11. Von dem Client 31, bzw. dem Datenverarbeitungssystem 23 und/oder dem Webbrowser 11 wird eine erste http-Anfrage an den Server 29 versendet woraufhin der Server 29 als html-Antwort 28 die Umgebung bereitstellt, in der das beschriebene Verfahren ausgeführt wird. Diese Umgebung umfasst beispielsweise auch schon die Wiedergabekomponente 19 mit der vorbereiteten Videodarstellungsebene 2 und die Bereitstellungskomponente 20 mit den verschiedenen Aktivierungsebenen 5,6. Anschließend werden von dem Webbrowser 11 bzw. dem Datenverarbeitungssystem 23 eine zweite http-Anfrage 26 und eine dritte http-Anfrage 27 an den Server 29 übermittelt. Die zweite http-Anfrage 26 und die dritte http-Anfrage 28 sind dem Webbrowser 11 bzw. dem Datenverarbeitungssystem 23 bevorzugt zuvor mit der html-Antwort 28 übermittelt worden. Der Server 29 umfasst bevorzugt eine Datenbank 30 in welcher die dem ersten Datenstrom 21 und dem zweiten Datenstrom 22 zugrunde liegenden Daten gespeichert sind. In Reaktion auf die zweite http-Anfrage 26 und die dritte http-Anfrage 27 greift der Server bevorzugt auf diese Datenbank 30 zu, um den ersten Datenstrom 21 und den zweiten Datenstrom 22 jeweils an den Client 31 bzw. die Wiedergabekomponente 19 und die Bereitstellungskomponente 20 bereitzustellen. Dabei erfolgt der Zugriff auf die Datenbank 30 mit der zweiten http-Anfrage 27 zur Bereitstellung des zweiten Datenstrom 22 völlig getrennt von dem Zugriff auf die Datenbank 30 mit der ersten http-Anfrage 26 zur Bereitstellung des ersten Datenstroms 21. Gegebenenfalls existieren für die Daten von ersten Datenströmen 21 und die Daten von zweiten Datenströmen 22 sogar getrennte Datenbanken auf dem Server 29.

Fig. 10 zeigt ein Ablaufdiagramm des beschriebenen Verfahrens zur Erzeugung eines zweiten Datenstroms. Schematisch zu erkennen sind die Verfahrensschritte A), B), C), D) und E). Hervorgehoben ist hier bei Schritt c), dass hier eine externe Softwarekomponente 32 genutzt werden kann, die zur Bewegungserkennnung ("Motion-Tracking") in einem Video dient.

### Bezugszeichenliste

- 1: Video
- 2: Videodarstellungsebene
- 3: erster Aktivierungsbereich
- 4: zweiter Aktivierungsbereich
- 5: erste Aktivierungsebene
- 6: zweite Aktivierungsebene
- 7: erster charakteristischer Punkt
- 8: zweiter charakteristischer Punkt
- 9: erstes Objekt
- 10: zweites Objekt
- 11: Browser
- 12: Steuerungskomponente
- 13: erstes Steuerungssignal
- 14: zweites Steuerungssignal
- 15: Überwachungssignal
- 16: Kontrollkomponente
- 17: Kontrollsignale
- 18: Überwachungskomponente
- 19: Wiedergabekomponente
- 20: Bereitstellungskomponente
- 21: erster Datenstrom
- 22: zweiter Datenstrom
- 23: Datenverarbeitungssystem
- 24: Koordinatensystem
- 25: erste http-Anfrage
- 26: zweite http-Anfrage
- 27: dritte http-Anfrage
- 28: html-Antwort
- 29: Server
- 30: Datenbank
- 31: Client
- 32: externe Softwarekomponente
- 33: dritter charakteristischer Punkt
- 34: Bild/Frame

## Patentansprüche

1. Verfahren zum Betrieb eines Datenverarbeitungssystems (23) zur Bereitstellung eines interaktiven Videoinhalts mit mindestens Interaktionsmöglichkeit für einen Benutzer mit dem Datenverarbeitungssystem (23) umfassend zumindest die folgenden Schritte:
a) Wiedergeben eines Videos (1) in einer Videodarstellungsebene (2), wobei das Video (1) dem Datenverarbeitungssystem (23) als ein erster Datenstrom (21) bereitgestellt wird, und
b) Bereitstellen mindestens eines für einen Benutzer aktivierbaren Aktivierungsbereichs (3,4) in einer die Videodarstellungsebene (2) zumindest teilweise überlagernden Aktivierungsebene (5, 6), wobei der mindestens eine Aktivierungsbereich (3,4) dem Datenverarbeitungssystem (23) als ein zweiter Datenstrom (22) bereitgestellt wird, wobei eine Veränderung des mindestens einen Aktivierungsbereichs (3, 4) vorgegeben ist, die zumindest teilweise mit der Wiedergabe des Videos (1) synchronisiert ist und wobei der erste Datenstrom (21) und der zweite Datenstrom (22) voneinander getrennt sind.

2. Verfahren nach einem der vorhergehenden Ansprüche, wobei der Aktivierungsbereich (3, 4) durch mindestens einen charakteristischen Punkt (7, 8) in dem Video (1) definiert ist, dem für eine Vielzahl von Zeitpunkten des Videos (1) eine jeweilige Koordinatenangabe (x,y) in einem das Video überlagernden Koordinatensystem (24) zugeordnet ist, und wobei in Schritt b) die Veränderung des mindestens einen Aktivierungsbereichs (3, 4) unter Verwendung der Koordinatenangaben (x,y) des mindestens einen charakteristischen Punkts (7, 8) erfolgt.

3. Verfahren Anspruch 2, wobei eine Position des mindestens einen Aktivierungsbereichs (3,4) innerhalb der Aktivierungsebene (5,6) entsprechend mindestens einer Koordinatenangabe (x,y) eines charakteristischen Punkts (7, 8) in dem Video (1) verändert wird.

4. Verfahren nach einem der Ansprüche 2 oder 3, wobei eine Form des mindestens einen Aktivierungsbereichs (3,4) innerhalb der Aktivierungsebene (5,6) entsprechend mindestens einer Koordinatenangabe (x,y) eines charakteristischen Punkts (7, 8) in dem Video (1) verändert wird.

5. Verfahren nach einem der Ansprüche 2 bis 4, wobei die Veränderung des mindestens einen Aktivierungsbereichs (3, 4) unter Verwendung einer zeitlich veränderlichen Anzahl von charakteristischen Punkten (7, 8) mit Koordinatenangaben (x,y) erfolgt.

6. Verfahren nach einem der vorhergehenden Ansprüche, wobei mindestens ein Aktivierungsbereich (3, 4) eine optische Gestaltung umfassend zumindest eines der folgenden Elemente aufweist:
- ein Bild,
- ein Text,
- ein geometrisches Objekt, und
- eine Schattierung.

7. Verfahren nach einem der vorhergehenden Ansprüche, wobei in Schritt b) zumindest eine optische Gestaltung mindestens eines Aktivierungsbereichs (3, 4) zeitlich synchronisiert mit dem gemäß Schritt a) wiedergegebenen Video (1) verändert wird.

8. Verfahren nach einem der vorhergehenden Ansprüche, wobei das Verfahren in einem Browser (11) ausgeführt wird, welcher auf dem Datenverarbeitungssystem (23) betrieben wird.

9. Verfahren nach Anspruch 8, wobei der erste Datenstrom (21) und der mindestens eine zweite Datenstrom (22) mit voneinander getrennten http-Anfragen (26, 27) an einen Server (29) bereitgestellt werden, wobei dieser Server (29) auf einem weiteren Datenverarbeitungssystem betrieben wird.

10. Verfahren nach einem der vorhergehenden Ansprüche, wobei nachfolgend zu Schritt b) folgender Schritt durchgeführt wird.
c) Erkennen einer Interaktion des Benutzers mit dem Datenverarbeitungssystem (23) durch Aktivieren des mindestens einen Aktivierungsbereichs (3,4) und Starten einer Aktion, wenn eine Interaktion erkannt wurde.

11. Verfahren nach Anspruch 10, wobei in Schritt c) zumindest eine der folgenden Aktionen durchgeführt wird, wenn eine Interaktion des Benutzers durch Aktivieren des mindestens einen Aktivierungsbereichs (3, 4) erkannt wurde:
- Unterbrechen der Wiedergabe des Videos (1) gemäß Schritt a),
- Verlangsamen der Wiedergabe des Videos (1) gemäß Schritt a),
- Gezieltes Zurückspringen im zeitlichen Verlauf des Videos (1),
- Öffnen eines neuen Fensters eines Webbrowsers (11),
- Absenden einer http-Anfrage,
- Einblenden oder Ausblenden mindestens einer Aktivierungsebene (5, 6),
- Aktivieren einer Browser-Funktion, oder
- Beliebige weitere Aktion.

12. Computerprogramm, eingerichtet zur Durchführung des Verfahrens nach einem der vorhergehenden Ansprüche auf mindestens einem Datenverarbeitungssystem (23).

13. Datenverarbeitungssystem (23), eingerichtet zur Durchführung eines Verfahrens nach einem der vorhergehenden Ansprüche.

14. Datenträger, auf dem ein Computerprogramm nach Anspruch 12 installiert ist.

15. Verfahren zum Erstellen eines zweiten Datenstroms (22) für das Verfahren nach einem der Ansprüche 1 bis 12 umfassend zumindest die folgenden Schritte:
A) Bereitstellen eines wiederzugebenden Videos (1),
B) Definieren mindestens eines charakteristischen Punkts (7, 8) in dem Video (1),
C) für eine Vielzahl von Zeitpunkten des Videos (1) automatisierte oder zumindest teilautomatisiertes Zuordnen von jeweiligen Koordinatenangaben (x, y) in einem das Video überlagernden Koordinatensystem (a) zu dem mindestens einen charakteristischen Punkt (7, 8),
D) Definieren eines Aktivierungsbereichs (3, 4), der zumindest teilweise mit Vorgängen in dem Video (1) zeitlich synchronisiert ist, wobei die in Schritt C) für die Vielzahl der Zeitpunkte des Videos (1) erhaltenen Koordinatenangaben (x,y) verwendet werden, und
E) Erstellen des zweiten Datenstroms (22) umfassend den in Schritt D) definierten Aktivierungsbereich (3,4), der mit dem Video (1) synchronisierbar ist.
